(19) Europäisches Patentamt European Patent Office Office européen des brevets

(11) **EP 4 563 049 A1**

(12) **EUROPEAN PATENT APPLICATION**
published in accordance with Art. 153(4) EPC

(43) Date of publication:
04.06.2025 Bulletin 2025/23

(21) Application number: 23846683.3

(22) Date of filing: 28.07.2023

(51) International Patent Classification (IPC):
*A47K 4/00* (2006.01)     *E03D 9/00* (2006.01)
*C02F 1/461* (2023.01)     *E03C 1/046* (2006.01)

(52) Cooperative Patent Classification (CPC):
A47K 4/00; C02F 1/461; E03C 1/046; E03D 9/00

(86) International application number:
PCT/JP2023/027796

(87) International publication number:
WO 2024/024953 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.07.2022 JP 2022122127
21.07.2023 JP 2023119228

(71) Applicant: TOTO LTD.
Kokurakita-ku
Kitakyushu-shi, Fukuoka 802-8601 (JP)

(72) Inventors:
• HOSOKAWA, Ayano
Kitakyushu-shi, Fukuoka 802-8601 (JP)
• ITAMI, Aiko
Kitakyushu-shi, Fukuoka 802-8601 (JP)
• YAMANA, Yoshimasa
Kitakyushu-shi, Fukuoka 802-8601 (JP)
• HAYAKAWA, Makoto
Kitakyushu-shi, Fukuoka 802-8601 (JP)
• TAKAESU, Hideki
Kitakyushu-shi, Fukuoka 802-8601 (JP)
• HATA, Akari
Kitakyushu-shi, Fukuoka 802-8601 (JP)

(74) Representative: Bandpay & Greuter
11, rue Christophe Colomb
75008 Paris (FR)

(54) **INDOOR UNIT INCLUDING EQUIPMENT THAT HANDLES TAP WATER AND METHOD FOR SUPPRESSING PROLIFERATION OF CHLORINE-RESISTANT METHYLBACTERIUM ON SURFACE OF SAID UNIT OR FOR KILLING CHLORINE-RESISTANT METHYLBACTERIUM THAT HAVE PROLIFERATED ON SURFACE OF SAID UNIT**

(57) Disclosed is a unit with a tap water-using facility in a building, the unit being capable of effectively suppressing the growth of a chlorine-resistant Methylobacterium, or being capable of effectively sterilizing the chlorine-resistant Methylobacterium that has once grown. This unit with a tap water-using facility is positioned in a building, and comprises a means to supply tap water to the tap water-using facility, an electrolytic device to produce electrolyzed water by electrolyzing the tap water, and a means to discharge the electrolyzed water which allows the electrolyzed water to be in contact with a surface of the unit. The electrolyzed water comprises ozone and free chlorine, and a concentration of the ozone and a concentration of the free chlorine satisfy, when the latter concentration is referred to as y (ppm) and the former concentration is referred to as x (ppm), all conditions represented by formula 1: $y \geq 4.1079e^{-18.35x}$ formula 2: $0.1 < y < 5$, and formula 3: $0 < x < 3$.

## Description

[Technical Field]

The present invention relates to a unit with a tap water-using facility, the unit being positioned in a building. More specifically, the present invention relates to the unit capable of being kept in a better sanitary or hygiene condition by making use of electrolyzed water that is produced by electrolyzing tap water. The present invention also relates to a method for preventing a chlorine-resistant Methylobacterium from growing on a surface of a unit with a tap water-using facility or to a method for sterilizing the chlorine-resistant Methylobacterium having once grown on the surface of the unit, the unit being positioned in a building.

[Background Art]

The number of the consumers seeking for a sanitary and comfortable life environment is increasing, and thus, a technology capable of keeping a life environment, in particular, a space in a building, in which a tap water-using facility is positioned sanitary. For example, in an area where tap water is used, such as a toilet, a bathroom, a kitchen, or a washbowl-equipped compartment, bacteria and fungi can easily grow. In order to keep these areas sanitary, constant cleaning is manually performed using a detergent, etc., which is a burdensome work. Moreover, the detergent can be problematic in terms of an environmental impact and a safety.

As a method for sterilizing the area where tap water is used, while reducing the burdensome work and problems mentioned above, the technology that makes use of electrolyzed water produced by electrolyzing tap water has been proposed. For example, JP H10(1998)-306484 A (Patent Literature 1) discloses that by allowing the water containing free chlorine (paragraph 0023) or ozone (paragraph 0025), which is obtained by electrolyzing tap water, to flow into a toilet main body, a urease-producing bacterium is sterilized, thereby resulting in suppressing the generation of ammonia and consequently in suppressing urinary stone staining. Patent Literature 1disclosed that "in the above-mentioned toilet main body the electrolytic cell 181 that produces free chlorine-containing water is installed, [...] but this may be replaced with the facility that produces ozone-containing water" (paragraph 0402). Also, in Examples section a bactericidal power of electrolyzed water containing either free chlorine or ozone is assessed. Therefore, it is understood that Patent Literature 1 fails to take electrolyzed water containing both free chlorine and ozone into consideration.

Furthermore, JP 2008-168002 A (Patent Literature 2) discloses that by discharging the water containing free chlorine (paragraph 0027) obtained by electrolyzing tap water onto a bathroom floor (washing place floor), microbial stains such as slime and pink stains may be reduced. According to Patent Literature 2, it is understood that water for use in sterilization (free chlorine-containing water) that is discharged onto the washing place floor and water for use in washing (ozone-containing water obtained by dissolving ozone gas in water) that is discharged mainly into a bathtub are separately used.

Moreover, JP 2008-073604 A (Patent Literature 3) discloses a sterilization method using electrolyzed water containing both ozone and hypochlorous acid. Patent Literature 3 specifically discloses that tap water containing sodium chloride is electrolyzed by using an electrolysis unit consisting of a joined body of a rod-like anode, a belt-like diaphragm that spirally twines around the anode, and a cathode that twines around the diaphragm to produce electrolyzed water that contains 3 ppm of ozone and 0.5 ppm hypochlorous acid (Example 2), and electrolyzed water that contains 0.1 ppm or less of ozone and 10 ppm hypochlorous acid (Example 3). However, the method disclosed in Patent Literature 3 is inconvenient for a person who carries out the method because, in order to produce the electrolyzed water containing both ozone and hypochlorous acid, especially to produce hypochlorous acid, the person needs to add sodium chloride (chlorine compound) to tap water which is a raw material every time the person produces said electrolyzed water, especially hypochlorous acid.

On the other hand, in Literature "A pink monster hiding in a bathroom, [Author: Nozomi IHARA], Journal of The Society for Biotechnology, Japan, Vol. 94, No. 4, 2016" (Non Patent Literature 1) discloses that pink stains formed in an area where water is used in a housing is mainly due to the growth of a gram-negative Methylobacterium, which is referred to as a purple bacterium. Non Patent Literature 1 also indicates that it is considered that carotenoid exhibiting a pink color, which can be characteristic of the Methylobacterium, expresses the function of eliminating an active oxygen generated inside the bacterium body when the bacterium receives a stress such as chlorine, and in consequence, Methylobacterium expresses a chlorine resistance more readily than other microorganisms. Non Patent Literature 1 further indicates that it is considered that the carotenoid also contributes to the increase of a membrane strength of the Methylobacterium, and in consequence, the Methylobacterium expresses the chlorine resistance.

Furthermore, Literature "The Mechanism of Resistance to Free Residual Chlorine in Protomonas extorquens Isolated at a High frequently from Drinking Tank-Water, [Author: Katsunori FURUHATA], J. Antibact. Antifung. Agents, Vol. 19, No. 8, p.395-399, 1991 (Non Patent Literature 2) indicates that as for a mutant strain obtained by making Protomonas extorquens, which belongs to the Methylobacterium, come in contact with chlorine, a cell membrane, in particular, an outer membrane thereof thickens and the surface structure thereof changes, and in consequence, the mutant strain has a system that strengthens the cell membrane thereof.

[Citation List]

[Patent Literatures]

    Patent Literature 1: JP H10(1998)-306484 A
Patent Literature 2: JP 2008-168002 A
Patent Literature 3: JP 2008-073604 A

[Non Patent Literatures]

    Non Patent Literature 1: A pink monster hiding in a bathroom" [Author: Nozomi IHARA], The Society for Biotechnology, Japan, Vol. 94, No. 4, 2016
Non Patent Literature 2: The Mechanism of Resistance to Free Residual Chlorine in Protomonas extorquens Isolated at a High frequently from Drinking Tank-Water, [Author: Katsunori FURUHATA], J. Antibact. Antifung. Agents, Vol. 19, No. 8, p.395-399, 1991

[Summary of Invention]

[Technical Problem]

In conventional techniques that have attempted to remove pink stains by using electrolyzed water produced by electrolyzing tap water in an environment where tap water is used, the pink stains sometimes remain even after the electrolyzed water is applied.

The inventors of the present invention have found that Methylobacterium having acquired a chlorine resistance by contacting with chlorine that is contained in tap water (hereinafter referred to as "chlorine-resistant Methylobacterium") is the source of the pink stains that are formed on or in a unit with a tap water-using facility; as a result, they have found a novel constitution by which the chlorine-resistant Methylobacterium can be effectively sterilized. Namely, they have confirmed that it is possible to effectively sterilize the chlorine-resistant Methylobacterium by using both ozone and free chlorine, even when the respective concentrations thereof are low.

Specifically, the present inventors have confirmed that a low concentration of ozone is capable of damaging or destroying the cell wall and cell membrane (biological membrane) of the chlorine-resistant Methylobacterium, and that a low concentration of free chlorine is capable of sufficiently killing the chlorine-resistant Methylobacterium that has been in the above state. They have further confirmed that to prepare electrolyzed water containing low concentrations of ozone and free chlorine by electrolyzing tap water and to allow the electrolyzed water thus prepared to be in contact with the surface of the unit with the tap water-using facility make it possible not only to effectively prevent the chlorine-resistant Methylobacterium from growing on the surface but also to effectively sterilize the chlorine-resistant Methylobacterium that has (once) grown on the surface. The present invention is based on these findings.

Accordingly, an object of the present invention is to provide a unit with a tap water-using facility in a building, the unit being capable of effectively preventing the chlorine-resistant Methylobacterium from growing or being capable of effectively sterilizing the chlorine-resistant Methylobacterium that has (once) grown.

[Solution to Problems]

The unit according to the present invention is characterized by that

    a unit with a tap water-using facility in a building, wherein
the unit comprises a means to supply tap water to the tap water-using facility, an electrolytic device to produce electrolyzed water by electrolyzing the tap water, and a means to discharge the electrolyzed water which allows the electrolyzed water to be in contact with a surface of the unit; and
the electrolyzed water comprises:

        A: 0.05 ppm or more of ozone and 1.5 ppm or more of free chlorine,
B: 0.1 ppm or more of ozone and more than 0.75 ppm of free chlorine, or
C: 0.2 ppm or more of ozone and 0.1 ppm or more of free chlorine.

[Effects of Invention]

According to the present invention, a low concentration of ozone and a low concentration of free chlorine make it possible to effectively prevent the chlorine-resistant Methylobacterium from growing on a surface of the unit with a tap water-using facility and to effectively sterilize the chlorine-resistant Methylobacterium that has already grown on the surface. In addition, it is possible to keep the growth prevention effect and bactericidal effect on the chlorine-resistant Methylobacterium for a long period of time. Moreover, according to the present invention, since the concentration of the ozone used is low, advantages can be obtained as follows: that the durability of the materials, such as a resin material and a rubber material, which compose the unit with the tap water-using facility is not impaired, that a load on the electrolytic device is low, and that a life-span of the electrode is not impaired, etc.

[Brief Description of Drawings]

    Figure 1 is a schematic drawing illustrating how the electrolyzed water in the present invention can exhibit an effective bactericidal action on the chlorine-resistant Methylobacterium.

Figure 2 (A) is a schematic drawing illustrating that even a low concentration of free chlorine alone can exhibit a bactericidal action on a Methylobacterium reference strain. Figure 2 (B) is a schematic drawing illustrating that a low concentration of free chlorine alone cannot exhibit a bactericidal action on the chlorine-resistant Methylobacterium.

Figure 3 illustrates one example of an electrolytic device that is capable of producing electrolyzed water containing both ozone and free chlorine. In this electrolytic device, it is possible to simultaneously produce ozone and free chlorine with one electrode pair.

Figure 4 illustrates another example of an electrolytic device that is capable of producing electrolyzed water containing both ozone and free chlorine. This electrolytic device includes an electrode pair that produces ozone and an electrode pair that produces free chlorine, separately.

Figure 5 illustrates still another example of an electrolytic device that is capable of producing electrolyzed water containing both ozone and free chlorine. In this electrolytic device, an electrode pair that produces ozone and an electrode pair that produces free chlorine are respectively installed in different electrolytic cells.

Figure 6 is a schematic drawing illustrating a toilet main body, which is one example of the unit according to the present invention.

Figure 7 is a schematic drawing illustrating one example of an electrolytic device and one example of a means to discharge electrolyzed water, each installed in the toilet main body.

Figure 8 is a schematic drawing illustrating a bathroom, which is one example of the unit according to the present invention.

Figure 9 is a schematic drawing illustrating a washbowl-equipped article, which is one example of the unit according to the present invention.

Figure 10 is a schematic drawing illustrating one example of an electrolytic device and one example of a means to discharge electrolyzed water, each installed in the washbowl-equipped article.

Figure 11 is a schematic drawing illustrating a kitchen, which is one example of the unit according to the present invention.

Figure 12 is a schematic drawing illustrating one example of an electrolytic device and one example of a means to discharge electrolyzed water, each installed in the kitchen.

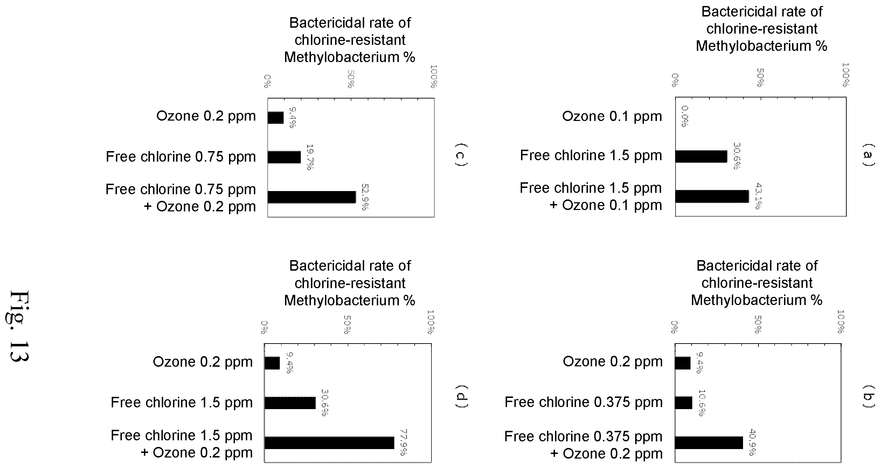

Figure 13 illustrates examples of concentration conditions of free chlorine and ozone under which a synergic bactericidal effect on the chlorine-resistant Methylobacterium can be recognized. (a) is a graph showing the bactericidal effect when the electrolyzed water containing 1.5 ppm of the free chlorine and 0.1 ppm of the ozone is applied to the chlorine-resistant Methylobacterium. (b) is a graph showing the bactericidal effect when the electrolyzed water containing 0.375 ppm of the free chlorine and 0.2 ppm of the ozone is applied to the chlorine-resistant Methylobacterium. (c) is a graph showing the bactericidal effect when the electrolyzed water containing 0.75 ppm of the free chlorine and 0.2 ppm of the ozone is applied to the chlorine-resistant Methylobacterium. (d) is a graph showing the bactericidal effect when the electrolyzed water containing 1.5 ppm of the free chlorine and 0.2 ppm of the ozone is applied to the chlorine-resistant Methylobacterium.

Figure 14 illustrates examples of concentration conditions of free chlorine and ozone under which a synergic bactericidal effect on the chlorine-resistant Methylobacterium cannot be recognized. (a) is a graph showing the bactericidal effect when the electrolyzed water containing 0.375 ppm of the free chlorine and 0.1 ppm of the ozone is applied to the chlorine-resistant Methylobacterium. (b) is a graph showing the bactericidal effect when the electrolyzed water containing 0.75 ppm of the free chlorine and 0.1 ppm of the ozone is applied to the chlorine-resistant Methylobacterium.

Figure 15 is a graph showing the bactericidal effect when electrolyzed water containing only free chlorine is applied to the chlorine-resistant Methylobacterium.

Figure 16 shows the results of the quantitative identification and observation of the degree of damage on the cell membrane of the chlorine-resistant Methylobacterium after being exposed to water containing free chlorine and/or ozone.

Figure 17 shows the images when the surface of the chlorine-resistant Methylobacterium is observed after being exposed to water containing free chlorine and/or ozone.

Figure 18 shows the images when the inner structure of the chlorine-resistant Methylobacterium is observed after being exposed to water containing free chlorine and/or ozone.

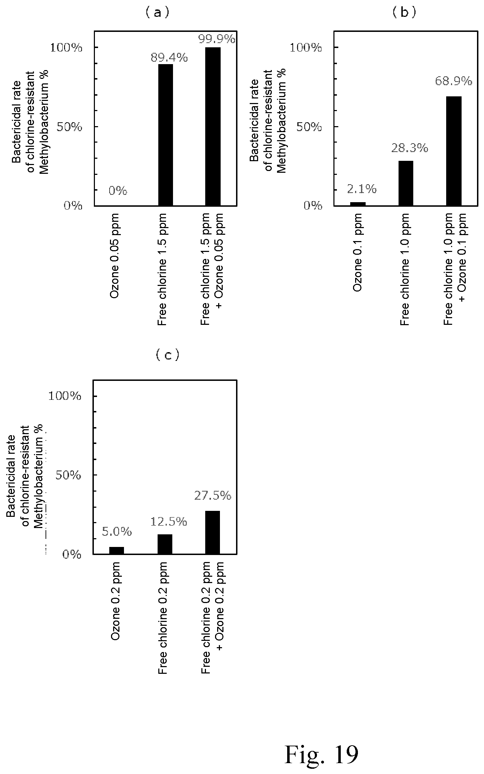

Figure 19 illustrates examples of concentration conditions of free chlorine and ozone under which a synergic bactericidal effect on the chlorine-resistant Methylobacterium can be recognized. (a) is a graph showing the bactericidal effect when the electrolyzed water containing 1.5 ppm of the free chlorine and 0.05 ppm of the ozone is applied to the chlorine-resistant Methylobacterium. (b) is a graph showing the bactericidal effect when the electrolyzed water containing 1.0 ppm of the free chlorine and 0.1 ppm of the ozone is applied to the chlorine-resistant Methylobacterium. (c) is a graph showing the bactericidal effect when the electrolyzed water containing 0.2 ppm of the free chlorine and 0.2 ppm of the ozone is applied to the chlorine-resistant Methylobacterium.

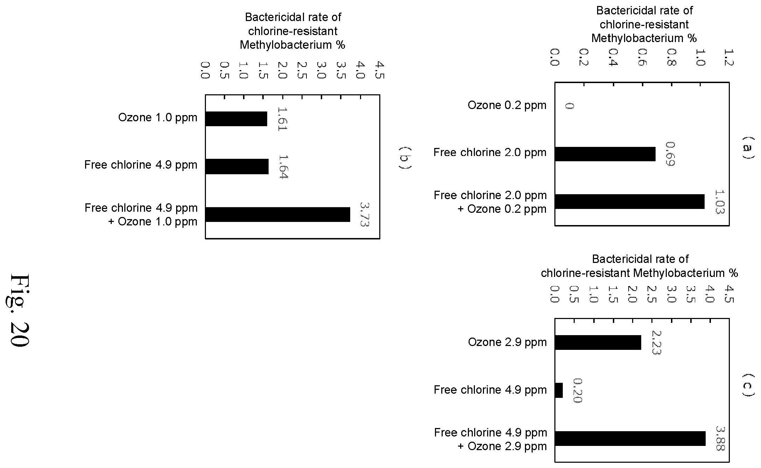

Figure 20 illustrates examples of concentration conditions of free chlorine and ozone under which a synergic bactericidal effect on the chlorine-resistant Methylobacterium can be recognized, in the presence of a moderate concentration of an organic substance on the surface of the unit. (a) is a graph showing the bactericidal effect when the electrolyzed water containing 2.0 ppm of the free chlorine and 0.2 ppm of the ozone is applied to the chlorine-resistant Methylobacterium. (b) is a graph showing the bactericidal effect when the electrolyzed water containing 4.9 ppm of the free chlorine and 1.0 ppm of the ozone is applied to the chlorine-resistant Methylobacterium. (c) is a graph showing the bactericidal effect when the electrolyzed water containing 4.9 ppm of the free chlorine and 2.9 ppm of the ozone is applied to the chlorine-resistant Methylobacterium.

Figure 21 visually shows a preferable concentration ranges of ozone and free chlorine contained in electrolyzed water as the area defined by the formulas 1, 2, and 3.

[Description of Invention]

Unit

The unit according to the present invention has a tap water-using facility and a means to supply tap water to the water-using facility (hereinafter referred to as simply "means to supply tap water". The term "unit" refers to a unit having both the tap water-using facility and the means to supply tap water, or a unit having a facility composed of the means to supply tap water itself.

Specifically, examples of the unit having both the tap water-using facility and the means to supply tap water include a bathroom (including a modular bathroom), a bathtub with a shower, a shower room (shower booth), a toilet (including public toilet), a toilet main body integrated with a toilet seat having a local cleaning device (here, the toilet seat having a local cleaning device corresponds to the tap water-using facility), a kitchen, and a bathroom vanity (wash stand), etc.

Example of the unit having the facility composed of the means to supply tap water itself includes a toilet seat having a local cleaning device (here, the local cleaning device corresponds to the tap water-using facility and also to the means to supply tap water). In the present invention, the term "facility composed of the means to supply tap water itself" means that the facility per se is a means which supplies tap water and also is the tap water-using facility. In an example of a toilet main body integrated with a warm-water washing toilet seat, a cleaning nozzle is the means to supply tap water and at the same time is the tap water-using facility. Here, the toilet main body integrated with the warm-water washing toilet seat having the cleaning nozzle is the unit.

Tap water-using facility

In the present invention, the term "tap water-using facility" refers to a facility that is used in the state that tap water and/or electrolyzed water are (or is) splashed onto its portion, or an ancillary facility that is used in the state that tap water and/or electrolyzed water are (or is) splashed onto its portion.

Examples of the facility that is used in the state that tap water and/or electrolyzed water are (or is) splashed onto its portion include a toilet main body, a washbasin, a toilet seat, a toilet lid, a urinal body, a bathtub, a counter, a washbasin bowl, a wall, a floor, a ceiling, a wash stand mirror, a bathroom mirror, a local cleaning nozzle, a shower, and a water tap (faucet), etc. For example, in the case that the unit is a toilet, examples of the tap water-using facility includes, as the facility that is used in the state that tap water and/or electrolyzed water are (or is) splashed onto its portion, a toilet main body, a washbasin, a urinal body, a toilet seat, a toilet lid, and a local cleaning nozzle, as well as members that constitute a toilet space, such as a floor, a wall, a ceiling, etc.

Examples of the ancillary facility that is used in the state that tap water and/or electrolyzed water are (or is) splashed onto its portion include, for example, in the case that the unit is a kitchen, cooking utensils such as a cutting board, and cleaning tools such as a sponge. In the case that the unit is a bathroom vanity, the examples include a cup and a toothbrush used in the washbowl-equipped compartment.

In the present invention, in addition to tap water and electrolyzed water, reformed water such as soft water may be flowed.

Means to supply tap water to the tap water-using facility

In the present invention, the term "means to supply tap water to the tap water-using facility" refers to a means that supplies tap water and/or electrolyzed water. Examples thereof include a shower, a water tap, a piping that supplies tap water and/or electrolyzed water to a toilet main body or a urinal body, a local cleaning nozzle, and a cleaning nozzle for a toilet main body or a urinal body. For example, in the case that the unit is a toilet, examples of the means to supply tap water include a piping that supplies tap water and/or electrolyzed water to a toilet main body or a urinal body, a local cleaning nozzle, and a cleaning nozzle for a toilet main body or a urinal body; in the case that the unit is a bathroom, examples of the means to supply tap water include a water tap and a shower; and in the case that the unit is a kitchen or a bathroom vanity, examples of the means to supply tap water include a water tap.

In one embodiment according to the present invention, it is preferable that the means to supply tap water to the tap water-using facility includes a first tap water supply means that supplies tap water to the tap water-using facility through an electrolytic device mentioned below and a second tap water supply means that supplies tap water to the tap water-using facility not through the electrolytic device.

In another embodiment according to the present invention, it is preferable that the means to supply tap water to the tap water-using facility is the first tap water supply means that supplies tap water to the tap water-using facility through an electrolytic device, and the tap water is supplied to the tap water-using facility when the electrolytic device is in OFF state, and the electrolyzed water is supplied to the tap water-using facility when the electrolytic device is in ON state,.

The unit according to the present invention is positioned in a building. In the present invention, the building includes any buildings for use in a daily life of a people under normal social conventions, such as a single-family house, a housing as such an apartment, ; a building, an office, a business place, etc., in which a people works; various facilities such as a commercial facility and a public facility for use by peoples; etc.

The unit according to the present invention comprises an electrolytic device that produces electrolyzed water by electrolyzing the tap water. In addition, the unit according to the present invention comprises a means to discharge the electrolyzed water produced by the electrolytic device which allows the electrolyzed water to be in contact with a surface of the unit. The electrolytic device and the means to discharge the electrolyzed water will be described later.

After the tap water-using facility is used, the tap water (other than tap water that is drained out of the unit by a draining means installed in the unit) attaches to a surface, etc. of the unit (as remaining or residual water), or flows on a surface of the unit, ultimately attaches to any place, and then dries. The tap water that has been attached to the surface of the unit contains the chlorine-resistant Methylobacterium. After the tap water-using facility is used, the chlorine-resistant Methylobacterium grows using, as nutrients, stains (organic substances such as protein and sebum) that are attached onto the surfaces of the said facility as well as of members, articles, etc. that constitute the unit. The aggregate of chlorine-resistant Methylobacterium colonies that has been formed on the surfaces of the tap water-using facility and of the unit including said facility are visually recognized as pink stains.

The means to discharge the electrolyzed water comprised in the unit according to the present invention can sterilize the chlorine-resistant Methylobacterium and thereby can remove the pink stains by allowing the electrolyzed water to be in contact with the surface of the unit.

Electrolyzed water produced by electrolyzing the tap water

The electrolyzed water produced by electrolyzing the tap water using the electrolytic device comprised in the unit according to the present invention comprises both ozone ($O_3$) and free chlorine. In the present invention, the free chlorine means a combination (mixture) of hypochlorous acid ($HClO$) and a hypochlorite ion ($ClO^-$). In one embodiment according to the present invention, the electrolyzed water comprises 0.05 ppm or more of the ozone and 1.5 ppm or more of the free chlorine. In another embodiment according to the present invention, the electrolyzed water comprises 0.1 ppm or more of the ozone and more than 0.75 ppm of the free chlorine. In still another embodiment according to the present invention, the electrolyzed water comprises 0.2 ppm or more of the ozone and 0.1 ppm or more of the free chlorine. Within the concentration range described above, as will be described later in Examples section, the electrolyzed water comprising both the ozone and the free chlorine can express a synergic bactericidal effect on the chlorine-resistant Methylobacterium in comparison with the bactericidal effect which the electrolyzed water solely including the ozone or the chlorine can express.

In the present invention, the respective concentrations of the ozone and the free chlorine comprised in the electrolyzed water is those comprised in the electrolyzed water at the time when the electrolyzed water is discharged (in a form of injection, spraying, sprinkling, or the like) from the means to discharge the electrolyzed water onto the surface of the unit.

The quantification of the ozone concentration in water is performed by the indigo method as stipulated in JIS B 9946:2019 in which the concentration of the indigo that is bleached by the reaction with the ozone is measured with a spectrophotometer, followed by calculating the ozone concentration based on the decrease in absorbance.

The quantification of the free chlorine concentration is performed by a DPD colorimetric method as stipulated in JIS K 0400-33-10:1999 which is based on the phenomenon where the free chlorine is reacted with DPD (N,N-diethyl-p-phenylenediamine) to exhibit a red color.

In the present invention, the tap water refers to the tap water (clean water) that has been sterilized by chlorine in a water purification plant and thereafter is supplied to a building such as a housing. In the present invention, it is preferable to produce the electrolyzed water by electrolyzing said tap water as it is. According to the present invention, for example, it is not necessary that to the tap water added is a chlorine compound such as sodium chloride, sodium hypochlorite, hypochlorous acid water, and others; the electrolyzed water having desired ozone concentration and free acid concentration, namely, the electrolyzed water comprising both the ozone and the free chlorine in the predetermined low-concentrations can be efficiently produced by controlling the electrolysis conditions, etc.

Mechanism of sterilization of chlorine-resistant methylobacterium by the electrolyzed water containing both ozone and free chlorine in low concentrations

In the present invention, a mechanism with which the electrolyzed water containing both the ozone and the free chlorine in low concentrations can exhibit a synergic effect on the sterilization of the chlorine-resistant Methylobacterium is considered as follows. However, the following description is just a hypothesis, so that the present invention shall never be interpreted restrictively thereby.

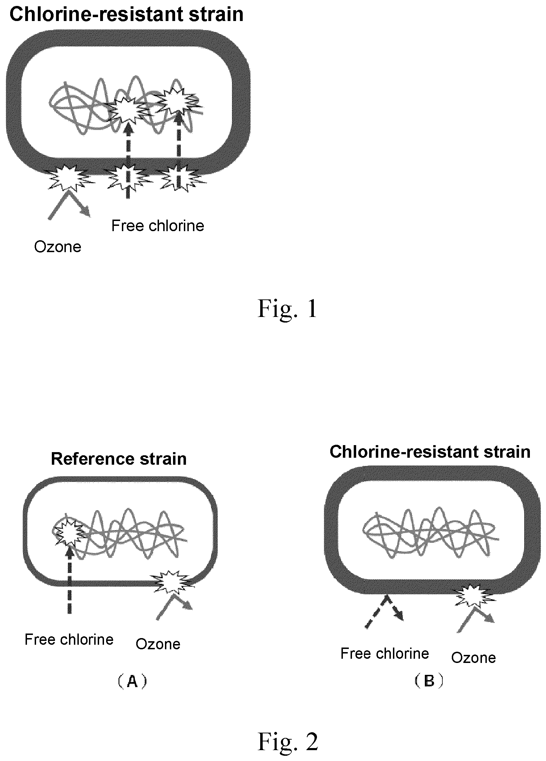

Since the ozone is strongly oxidative, it can damage or destroy a cell wall and a thickened cell membrane (hereinafter referred to as simply "cell membrane") of the chlorine-resistant Methylobacterium (hereinafter referred to as simply "cell body") even in a low concentration, for example, 0.05 ppm. On the other hand, the ozone is an unstable molecule, so that the oxidative power thereof is poor in continuousness. Therefore, it is difficult for a low concentration of ozone alone to overcome the cell body's defensive power against the oxidative damage after said ozone destroys the cell wall and cell membrane, and to continually express a sufficient oxidative power (cytotoxicity) enough to oxidatively decompose biological substances (e.g., nucleic acids and proteins) in the cell body. Thus, it is hard for a low concentration of ozone alone to definitely kill the cell body. In the present invention, however, a low concentration of the free chlorine plays a role in oxidatively decomposing the biological substances present inside the cell membrane which has been destroyed by ozone, and in definitely killing the chlorine-resistant Methylobacterium. The effect of the electrolyzed water in the present invention on the chlorine-resistant Methylobacterium is schematically illustrated in Figure 1 (in Figure 1, Chlorine-resistant strain means the chlorine-resistant Methylobacterium, and the grey zone illustrates the thickened cell membrane of the chlorine-resistant Methylobacterium. The cell wall is not illustrated in the figure).

As illustrated in Figure 2B, it is difficult for a low concentration of free chlorine alone to destroy the cell wall and the thickened cell membrane of the chlorine-resistant Methylobacterium. In the present invention, however, as described above, a low concentration of ozone can play a role in destroying the cell wall and the thickened cell membrane of the chlorine-resistant Methylobacterium, instead of said free chlorine. Thereby, the free chlorine can pass through the cell membrane that has been destroyed by the ozone and penetrate into the cell body. In addition, since the free chlorine can sustainably express the oxidative power, it can oxidatively decompose the biological substances definitely after penetrating into the cell body. On the other hand, Figure 2A shows that even a low concentration of the free chlorine alone can destroy the cell membrane of a Methylobacterium reference strain and can oxidatively decompose the biological substances present inside the cell body in said strain.

As described above, by making use of the characteristics of ozone and free chlorine, the electrolyzed water in the present invention can accomplish the sterilization of the chlorine-resistant Methylobacterium even when both concentrations of the ozone and the free chlorine are low, especially when the ozone concentration is as low as 0.05 ppm, whereas it has been difficult for either one of ozone and free chlorine only to accomplish the sterilization of the chlorine-resistant Methylobacterium even if the concentration of said either one of ozone and free chlorine is high.

Suitable concentration range of ozone and free chlorine compriseed in electrolyzed water

In the present invention, the electrolyzed water comprises:

A: 0.05 ppm or more of the ozone and 1.5 ppm or more of the free chlorine;
B: 0.1 ppm or more of the ozone and more than 0.75 ppm of the free chlorine; or
C: 0.2 ppm or more of the ozone and 0.1 ppm or more of the free chlorine.

In the present invention, when the electrolyzed water comprises 0.05 ppm or more of the ozone, the free chlorine concentration is preferably 1.6 ppm or more, more preferably 2.0 ppm or more.

In the present invention, when the electrolyzed water comprises 0.1 ppm or more of the ozone, the free chlorine concentration is preferably 1.0 ppm or more, more preferably 1.5 ppm or more.

In the present invention, when the electrolyzed water comprises 0.2 ppm or more of the ozone, the free chlorine concentration is preferably 0.2 ppm or more, more preferably 0.3 ppm or more, and still more preferably 0.375 ppm or more.

In the present invention, when the electrolyzed water comprises 0.3 ppm or more of the ozone, the free chlorine concentration is preferably 0.1 ppm or more, more preferably 0.2 ppm or more, still more preferably 0.3 ppm or more, and at most preferably 0.375 ppm or more.

In the present invention, it is preferable that the ozone concentration comprised in the electrolyzed water is 3 ppm or less, preferably less than 3 ppm, and more preferably 2.9 ppm or less. In this case, the cell wall and cell membrane of the chlorine-resistant Methylobacterium can be effectively destroyed; as a result, not only the free chlorine is allowed to penetrate into the cell body, but also advantages can be obtained as follows: that the durability of the materials, such as a resin material and a rubber material, which compose the unit according to the present invention is not impaired, that a load on the electrolytic device is low, and that a life-span of the electrode is not impaired, etc.

In the present invention, the upper limit of the free chlorine concentration is not particularly restricted, but the upper limit is, for example, 5 ppm or less, preferably less than 5 ppm, more preferably 4.9 ppm or less, still more preferably 4 ppm or less, 3 ppm or less, or 2 ppm or less. With these concentrations, the value of the electric current applied to the electrode is not so high that deterioration of the electrodes can be suppressed. Therefore, frequent exchange of the electrodes can be avoided, thereby leading to enhancement of the user's convenience. In addition, the increase in the area of the electrode can be reduced, and the electrolysis can be carried out in a state that the electrolyzed water is flowing or running. These make it possible to downsize the electrolytic device, which is suitable as an electrolytic device that is installed in the space where tap water is used in a building.

Concentration of organic substances that may exist on surface to which electrolyzed water is discharged or on or in an ancillary facility

In the unit according to the present invention, not only the chlorine-resistant Methylobacterium but also organic substances that are originated from various dirt may exist on surface to which the electrolyzed water is discharged or on or in the ancillary facility. In the present invention, the concentrations of the ozone and of the free chlorine comprised in the electrolyzed water can be determined in consideration of the existence of these organic substances. Hereinafter, the concentration of these organic substances that may co-exist with the chlorine-resistant Methylobacterium is described in accordance with three levels of concentration degree.

<Case where the concentration of organic substances is low (ng to $\mu$g/L-order)>

It is considered that if surfaces of a bathtub and of a washing place floor in a bathroom, of a washbasin bowl, of a kitchen sink, etc. are kept clean by daily cleaning thereof, then there are not so many stains on said surfaces; and then the stains attached to said surfaces along with the use of the above-mentioned units are also flushed with running water; and therefore, the organic substances that exist on these surfaces are very small, for example, in the level of ng to $\mu$g/cm$^2$. In consequence, when the chlorine-resistant Methylobacterium is attached to these surfaces together with water, and some of the organic substances present on the surfaces are dissolved out with water, then the chlorine-resistant Methylobacterium co-exist with a low concentration (ng to $\mu$g/L-order) of the organic substances.

<Case where the concentration of organic substances is medium (mg/L-order)>

For example, phlegm is composed of water, the component ratio of which is about 94%, and the rest components of phlegm in the component ratio of 6% are mainly saccharide such as sialic acid. When the throat is infected by bacteria, organic substances including dead bacteria increase, and it is thus considered that the concentration of said organic substances is estimated to about 60 g/L. When the chlorine-resistant Methylobacterium is attached to the surface of the facility such as a washbasin bowl and is further covered with the phlegm, and the phlegm remains on the surface without being flushed with running water after the facility is used, then the concentration of the organic substances is estimated to be 600 mg/L, assuming that the phlegm is diluted 100-fold with electrolyzed water. On the other hand, in the specification test in line with, for example, JIS R 1702:2020, a bacterium solution is prepared with the NB medium that has been diluted 500-fold, and the resulting solution is applied to an antibacterial substrate. In this case, the organic substance concentration is 26 mg/L which corresponds to a total amount of meat extract and peptone contained, as material, in the medium. The concentration of the organic substances corresponding to the stains present on the surface of the facility and on or in the ancillary facility varies depending on the cases, but envisaging the concentration as the range of several tens of to several hundred of mg/L is considered to be realistic.

<Case where the concentration of organic substances is high (g/L-order)>

The human feces are composed of water, the composition ratio of which is about 70%, and of organic substances such as food residues, dead bodies of intestinal wall cells and dead bodies of intestinal bacteria, the composition ratio of which is about 30%, although the composition of said feces varies depending on their conditions. Therefore, the concentration of organic substances in said feces is estimated to be, for example, 300 g/L.

In view thereof, when the chlorine-resistant Methylobacterium is attached to a toilet bowl and is further covered with feces, and the feces remains on said bowl, it is required to kill the chlorine-resistant Methylobacterium in the presence of organic substances in the concentration of g/L-order.

In the present invention, when an organic substance(s) is(are) present on the surface of the unit, the electrolyzed water containing the ozone and the free chlorine is preferably any one of a, b, and c below.

a: water containing 2.9 ppm or less of the ozone, and 4.9 ppm or less of the free chlorine;
b: water containing 1.0 ppm or less of the ozone, and 4.9 ppm or less of the free chlorine; and
c: water containing 0.2 ppm or less of the ozone, and 2.0 ppm or less of the free chlorine.

In the presence of the organic substance(s) on the surface of the unit, there is a possibility of decrease in the bactericidal effect of the free chlorine and of the ozone; but within the concentration ranges described above, sterilization of the chlorine-resistant Methylobacterium may be effectively realized.

In the present invention, it is preferable that the concentration of the ozone and the concentration of the free chlorine satisfy, when the latter concentration is referred to as y (ppm) and the former concentration is referred to as x (ppm), all conditions represented by the following formula 1, formula 2, and formula 3:

$$\text{Formula 1: } y \geq 4.1079e^{-18.35x}$$

$$\text{Formula 2: } 0.1 \leq y < 5$$

$$\text{Formula 3: } 0 < x < 3$$

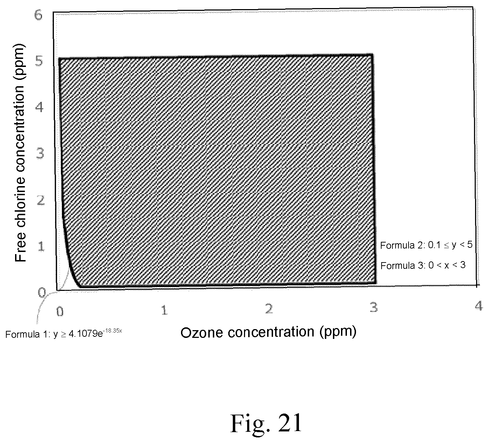

In Fig. 21, the preferable range of the concentrations of the ozone and of the free chlorine that satisfies all the formulas: 1, 2, and 3 is visually illustrated as the area defined by these formulas.

Electrolytic device

In the present invention, the electrolytic device may be a device that is capable of producing the electrolyzed water as mentioned above, namely, the electrolyzed water comprising 0.1 ppm or more of the ozone and 0.75 ppm or more of the free chlorine, or the electrolyzed water containing 0.2 ppm or more of the ozone and 0.1 ppm or more of the free chlorine. It is preferable that the electrolytic device comprises an electrolytic cell that is capable of producing the above-mentioned electrolyzed water by electrolysis of the tap water and a control unit that controls the electrolysis.

Electrode

In the present invention, an electrode of the electrolytic device may be one this is capable of producing both the ozone and the free chlorine.

For example, the electrolytic device may have one electrode that is able to produce both the ozone and the free chlorine.

Alternatively, the electrolytic device may have an electrode that can produce the ozone and an electrode that can produce the free chlorine, separately. In this case, these two electrodes may be arranged in parallel or in series.

Alternatively, the electrolytic device may have an electrode that can produce both the ozone and the free chlorine as well as an electrode that can produce the ozone, separately. In this case these two electrodes may be arranged in parallel or in series.

Alternatively, the electrolytic device may have an electrode that can produce both the ozone and the free chlorine as well as an electrode that can produce the free chlorine. In this case these two electrodes may be arranged in parallel or in series.

Alternatively, the electrolytic device may have an electrode that can produce both the ozone and the free chlorine, an electrode that can produce the free chlorine, and an electrode that can produce the ozone. In this case, these three electrodes may be arranged in parallel, in series, or in a combination thereof.

(Electrolytic device example 1)

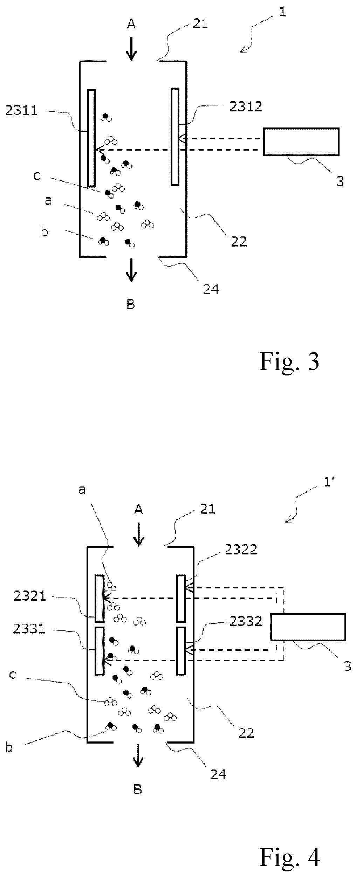

In one embodiment of the present invention, the electrolytic device may be the one as illustrated in Figure 3. The electrolytic device 1 illustrated in Figure 3 has an electrolytic cell 2 and a control unit 3. The electrolytic device 1 produces the electrolyzed water containing both the ozone and the free chlorine, and discharges the same from the device. Hereinafter, the constitution, control, and action of the electrolytic device 1 are described.

[Constitution]

<Electrolytic Cell 2>

The electrolytic cell 2 includes a flow inlet port 21 through which tap water flows in, a flow path 22 that communicates with the flow inlet port 21, an electrode 231 that is positioned in the flow path 22 and that electrolyzes the tap water having once flowed in, and a flow outlet port 24 that is positioned in a downstream side relative to the flow path 22 as well as in a downstream side relative to the electrode 231.

The flow inlet port 21 allows tap water to flow into the electrolysis cell 2.

The flow path 22 may be formed, for example, by a sealing member so that can prevent the tap water having once flowed in the electrolytic cell 2 from leaking out. In the flow path 22, the electrode 231 is installed.

The electrode 231 is a pair of the electrodes, an anode 2311 and a cathode 2312. The anode 2311 and a cathode 2312 may be both plate-like. The tap water is electrolyzed between the anode and the cathode to produce both the ozone ($O_3$, shown by "a" in the figure) and the free chlorine (namely, hypochlorous molecule (HClO), shown by "b" in the figure, and hypochlorite ion ($ClO^-$), shown by "c" in the figure).

The flow outlet port 24 discharges the resulting electrolyzed water to the outside of the electrolytic cell 2. It is preferable that the flow outlet port 24 is communicated with a means to discharge the electrolyzed water (not illustrated in the figure) that allows the electrolyzed water to be in contact with the surface of the unit.

<Control Unit 3>

The control unit 3 is electronically communicated with the electrode 231, and has a function to produce both the ozone and the free chlorine by electrolysis as well as a function to control the produced ozone concentration by controlling any one or both of a voltage and a current. The control unit 3 may have functions to control the opening and closing of an electromagnetic valve for the tap water that has flowed in through the flow inlet port 21, the opening and closing of an electromagnetic valve for the electrolyzed water that will flow out through the flow outlet port 24, a manual/automatic switch, various sensors, etc. so that they can properly work. It is preferable that the control unit 3 further has a function to control an operation where the electrolyzed water can be discharged from the means to discharge the electrolyzed water and can come in contact with the surface of the unit.

[Control]

In this embodiment, the tap water is introduced from the flow inlet port 21 into the electrolytic cell 2, as illustrated by an arrow A. The tap water having flowed thereinto the cell 2 flows through between the anode 2311 and the cathode 2312 and is flowed out of the electrolytic cell 2 through the flow outlet port 24, as illustrated by an arrow B. At this time, while the control unit 3 is electronically communicated with the electrode 231, the tap water that flows through the flow path 22 is electrolyzed to produce the ozone (a) and the free chlorine (b and c). It is preferable to control the electronical communication so that it is performed while the tap water is flowing through the flow path 22.

[Action]

The electrolytic device 1 electrolyzes the tap water to produce the ozone and the free chlorine, and discharges the resulting electrolyzed water containing both of them. The electrolyzed water is transferred from the flow outlet port 24 to the means to discharge the electrolyzed water and then is discharged onto the surface of the unit.

In the present invention, the respective concentration ranges of the ozone and the free chlorine contained in the electrolyzed water have already been described, and the respective concentrations are defined as those contained in the electrolyzed water at the time when the electrolyzed water is discharged from the means to discharge the electrolyzed water. The electrolyzed water is obtained as a electrolyzed water containing desired concentrations of ozone and free chlorine by electrolysis of tap water under the control (for example, voltage and/or current applied to the electrode 231) by the control unit 3 in the electrolytic cell 2; then, the resulting electrolyzed water flows out of the flow outlet port 24, and is discharged from the means to discharge the electrolyzed water, and finally comes into contact with the surface of the unit. In the present invention, it is preferable, in consideration of the structure, etc., of the unit, to control the respective concentrations of the ozone and the free chlorine of the electrolyzed water that is produced in the electrolytic cell 2, namely, the electrolyzed water at the time when it is discharged from the flow outlet port 24, on the basis of the desired concentrations of the ozone and the free chlorine contained in the electrolyzed water at the time when it is discharged from the means to discharge the electrolyzed water.

(Electrolytic Device Example 2)

In one embodiment of the present invention, the electrolytic device may be the one as illustrated in Figure 4. The electrolytic device 1' illustrated in Figure 4 has the same constitution, control, and action as those the electrolytic device 1 has, except that the device 1' separately has an electrode pair 232 that mainly produces the ozone and an electrode pair 233 that mainly produces free chlorine, whereas the electrolytic device 1 illustrated in Figure 3 has one electrode pair 231 that can simultaneously produce both the ozone and the free chlorine.

The electrode pair 232 is a pair of electrodes that mainly produces the ozone and is composed of an anode 2321 and a cathode 2322. The electrode pair 233 is a pair of electrodes that mainly produces the free chlorine and is composed of an anode 2331 and a cathode 2332.

The tap water that has been introduced from the flow inlet port 21 into the electrolytic cell 2 flows through between the anode 2321 and the cathode 2322, and subsequently flows through between the anode 2331 and the cathode 2332, and is flowed out of the electrolytic cell 2 through the flow outlet port 24. At this time, while the control unit 3 is electronically communicated with the electrode pair 232, the tap water that flows through the flow path 22 is electrolyzed to mainly produce the ozone. Further, while the control unit 3 is electronically communicated with the electrode pair 233, the tap water that flows through the flow path 22 is electrolyzed to mainly produce the free chlorine. In Figure 4, the position of the electrode pair 232 that mainly produces the ozone and the electrode pair 233 that mainly produces the free chlorine may be exchanged.

(Electrolytic Device Example 3)

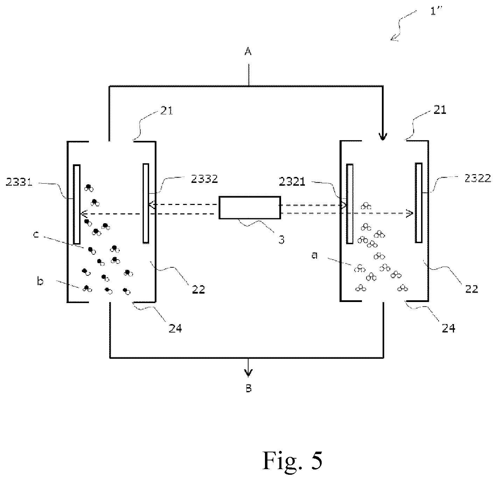

In one embodiment of the present invention, the electrolytic device may be the one as illustrated in Figure 5. The electrolytic device 1" illustrated in Figure 5 has the same constitution, control, and action as those the electrolytic device 1' illustrated in Figure 4 has, except that the electrode pair 232 that mainly produces the ozone and the electrode pair 233 that mainly produces the free chlorine that are possessed by the electrolytic device 1' are installed in different electrolytic cells.

In the present invention, it is preferable that the electrolytic cells described above do not comprise a means to supply a chlorine compound to an electrode. In other words, it is not necessary for the electrolytic cell in the present invention to supply a chlorine compound to the electrode. In order to adjust (increase) the conentration of the free chlorine contained in the electrolyzed water to a desired concentration, for example, as disclosed in Patent Literature 3, it is considered that to the tap water a chlorine compound such as sodium chloride, sodium hypochlorite, and hypochlorous acid water, and others. A solution to the above includes, for example, the one where a means to store the chlorine compound and a valve to supply the chlorine compound to the electrode are incorporated into the electrolytic device. According to the present invention, however, as described above, the tap water is electrolyzed as it is to obtain the electrolyzed water containing both the ozone and the free chlorine in the particular low concentrations, and therefore, the chlorine-resistant Methylobacterium can be effectively sterilized. Moreover, the electrolytic device in the present invention can produce said electrolyzed water. Consequently, according to the present invention, inherently, it is not necessary to add the chlorine compound to tap water which is a raw material in order to obtain the free chlorine in the particular low concentration (together with the ozone in the particular low concentration).

Electrode Material

The electrolytic device 1 illustrated in Figure 3 has one electrode pair 231, and produces the ozone and the free chlorine simultaneously. The electrode pair 231 may include, for example, a substrate and a catalytic layer formed on the substrate. The substrate may be composed of, for example, titanium or a titanium alloy. The catalytic layer may be a single layer or multiple layers. The material that constitutes the catalytic layer is preferably a metal compound, or an oxide or a composite thereof, the metal compound comprising at least one selected from tin, antimony, nickel, iron, zinc, bismuth, platinum, palladium, rhodium, ruthenium, iridium, osmium, zirconium, niobium, aluminum, gallium, cobalt, cesium, selenium, zinc, molybdenum, manganese, vanadium, germanium, tellurium, and silver. The material is more preferably a metal compound, or an oxide or a composite thereof, the metal compound comprising at least one selected from tin, antimony, nickel, iron, zinc, and bismuth.

The electrolytic device 1' illustrated in Figure 4 has two electrode pairs 232 and 233.

The electrode pair 232 may be the one that mainly produces the ozone, and includes the anode 2321 and the cathode 2322 which are separately positioned by a gap that is arranged between them. The electrode pair 232 may be, for example, an electrode structure including an anode member and a cathode member which are separately positioned by a gap that is arranged between the two members, as described in JP 6890793 B (see, claim 4, paragraph 0033, etc.). the descriptions with regard to the electrode structure of the said patent are incorporated herein by reference, as the descriptions with regard to the electrode pair 232 in the present invention. The material of the electrode pair 232 may be any of conductive metals, examples of which include platinum group elements, nickel, stainless steel, titanium, zirconium, gold, silver, carbon, and a precious metal such as iridium, and an oxide thereof, a niobium oxide, or a tantalum oxide.

The electrode pair 232 may be an electrode having the catalytic layer formed on the substrate of the anode 2321, as well as an ion-exchange sheet and the cathode 2322 laminated on said catalytic layer in this order. The electrode unit for electrolysis described in JP 2012-12695 A may be used as the electrode above. The descriptions with regard to the electrode unit for electrolysis of said publication are incorporated herein by reference, as the descriptions with regard to another embodiment of the electrode pair 232 in the present invention. The substrate of the anode 2321 may be, for example, titanium, carbon, tungsten, niobium, or silicon; and the catalytic layer of the anode may be a conductive diamond film; and the cathode may be an electrode plate made of a metal (for example, made of SUS 304) having the thickness of about 1 mm.

The electrode pair 233 may be the one that mainly produces the free chlorine, and includes, for example, a substrate and a catalytic layer formed on the substrate. The electrode for electrolysis described in JP 2013-142166 A may be used as the electrode above. The descriptions with regard to the electrode for electrolysis of said publication are incorporated herein by reference, as the descriptions with regard to the electrode pair 233 in the present invention. The substrate may be made of, for example, titanium or a titanium alloy. The catalytic layer may be a single layer or multiple layers. The catalytic layer may be a metal composite and/or a metal oxide composite that include(s) at least one selected from a platinum compound, an iridium compound, a rhodium compound, and a tantalum compound. Examples of the platinum compound include chloroplatinic acid and platinum chloride; among them chloroplatinic acid is preferable. Examples of the iridium compound include Hexachloroiridic acid, iridium chloride, and iridium nitrate; among them iridium chloride is preferable. Examples of the rhodium compound include rhodium chloride and rhodium nitrate; among them rhodium chloride is preferable. Examples of the tantalum compound include tantalum chloride and tantalum ethoxide; among them tantalum ethoxide is preferable.

Specific embodiments of the unit according to the present invention

Toilet unit

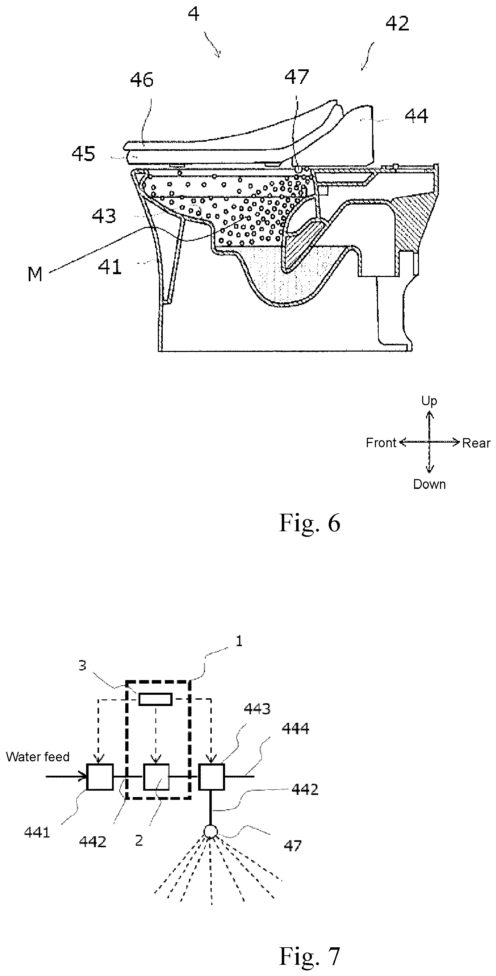

According to one embodiment of the present invention, the unit according to the present invention is a toilet unit. Hereinafter, with reference to Figure 6, the constitution of the toilet unit is described. The tap water-using facility comprised in a toilet unit 4 includes a bowl 43 of a western style toilet main body 41, a sanitary cleaning device (warm-water washing toilet seat) 42, a casing 44, a toilet seat 45, a toilet lid 46 (optional), as well as a floor and a wall of a toilet. In this embodiment, the means to supply the tap water to the tap water-using facility refers to a piping to supply the tap water into the bowl 43 (not illustrated in the figure) in order to clean the toilet main body 41 and to remove the waste in the bowl 43 and to a piping to supply the tap water to the sanitary cleaning device (warm-water washing toilet seat) 42. The electrolytic device may be the above-mentioned electrolytic devices 1, 1', and 1", and may be installed inside the toilet seat (preferably warm-water washing toilet seat), inside a urinal body, and outside the toilet main body (or a urinal body). In Figure 6, the electrolytic device 1 is installed inside the casing 44. The means to discharge the electrolyzed water that allows the electrolyzed water to be in contact with the surface of the unit is a spray nozzle (spraying member) 47, which may be installed inside or outside of the casing 44. The spray nozzle 47 discharges the electrolyzed water produced by the electrolytic device in the form of a mist; as a result, the electrolyzed water comes in contact with the surface of the unit, i.e., the surface of the tap water-using facility (for example, the surface of the bowl 43 and the region in the surface of the bowl with height corresponding to the height of 2 cm from the water surface) as well as the surface of a floor and of a wall of the toilet, in the state of a mist M. As a result, the surface of the unit is sterilized.

In this embodiment, it is possible to control the unit so that the electrolyzed water is produced in the electrolytic device, and the resulting electrolyzed water is discharged from the spray nozzle 47, and the surface of the bowl 43 is sterilized, after flush-cleaning of the toilet main body 41 is over, or at a certain time interval, or by detecting the ON state of the manual switch.

In this embodiment, an example of the constitution in which the electrolytic device and the means to discharge the electrolyzed water are installed inside the casing 44 is described below with reference to Figure 7.

[Constitution]

The casing 44 includes the electrolytic device 1, the electromagnetic valve 441, the first flow path 442, a flow rate and flow direction-switching valve 443, and the second flow path 444. As described before, the electrolytic device 1 produces the electrolyzed water containing both the ozone and the free chlorine, and discharge the same from the device. The control unit 3 of the electrolytic device 1 has, in addition to the functions as described above, the function to control the electromagnetic valve 441 and the flow rate and flow direction-switching valve 443. The electromagnetic valve 441 is an openable and closable electromagnetic valve and controls the supply of the tap water in accordance with an instruction from the control unit 3. The flow path 442 guides the tap water or the electrolyzed water to the spray nozzle 47. The flow rate and flow direction-switching valve 443 controls the flow strength (flow rate) and also conducts the opening and closing or switching of the supply of the tap water or the electrolyzed water to the spray nozzle 47, a (warm-water) cleaning nozzle (not illustrated in the figure), etc. The flow path 444 guides the electrolyzed water to, for example, the cleaning nozzle or a nozzle cleaning compartment.

[Control]

The tap water is guided to the first flow path 442 through the electromagnetic valve 441, and then flows into the electrolytic device 1 to produce the electrolyzed water. After the resulting electrolyzed water passes through the flow rate and flow direction-switching valve 443, it is guided to the spray nozzle 47, and is sprayed to the bowl 43. On the other hand, the electrolyzed water or the tap water that is guided to the second flow path 444 bifurcated by the flow rate and flow direction-switching valve 443 is discharged outside the casing 44. The flow rate and flow direction-switching valve 443 can switch the condition under which the electrolyzed water and the tap water is guided to the first flow path 442 to the condition under which the electrolyzed water and the tap water is guided to the second flow path 444, in accordance with an instruction from the control unit 3.

Bathroom or Shower room

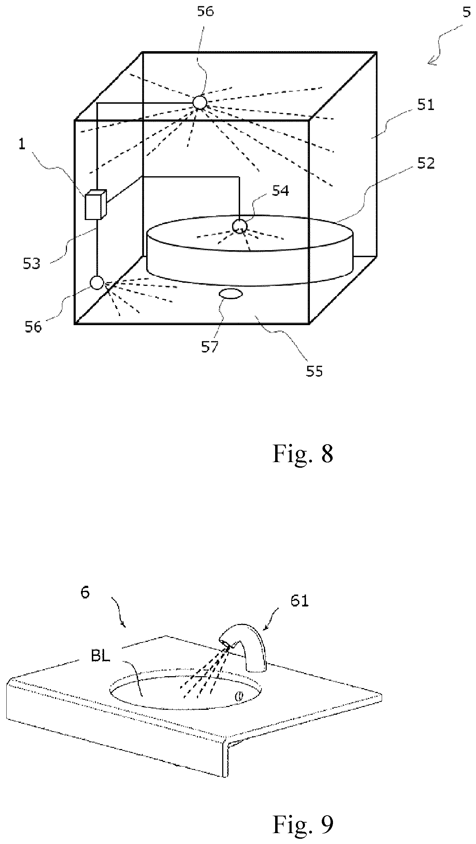

According to one embodiment of the present invention, the unit according to the present invention is a bathroom or a shower room. Hereinafter, with reference to Figure 8, the constitution of the bathroom will be exemplified. The tap water-using facility comprised in the bathroom unit 5 includes the bathtub 52, the washing place (floor) 55, the drain outlet port 57, the bathroom wall 51 and the bathroom ceiling, as well as a shower, a counter, a mirror, a hot-water supply control panel, etc. (these are not illustrated in the figure). In this embodiment, the means to supply the tap water to the tap water-using facility is a water tap, a shower, etc. (these are not illustrated in the figure). The electrolytic device may be, for example, the above-mentioned electrolytic devices 1, 1', or 1", and may be installed on, for example, the bathroom floor 55, the counter, and the wall 51. In the example illustrated in Figure 8, the electrolyzed water containing both the ozone and the free chlorine that is produced by the electrolytic device 1 is delivered to the discharge port 54 and to the discharge member 56 through the flow path 53. The discharge port 54 and the discharge member 56 are the means to discharge the electrolyzed water that allows the electrolyzed water to be in contact with the surface of the bathroom unit. The discharge port 54 discharges the electrolyzed water inside the bathtub 52 in the form of shower to sterilize and clean the wall surface and the floor surface of the bathtub. The discharge member 56 discharges the electrolyzed water onto inner walls of the bathroom (surfaces of ceiling, wall, and floor) in the form of shower to sterilize and clean the wall surface and the floor surface of the bathtub. The drain outlet port 57 drains the water and hot water that have been used in the bathroom 51 as well as the sprayed electrolyzed water outside the bathroom. The unit also includes the embodiment where the water and hot water that have been used in the bathtub 52 as well as the sprayed electrolyzed water are drained from a drain port in the bathtub 52 (the drain port is not illustrated in the figure) to the drain outlet port 57.

[Control]

Tap water is guided inside the electrolytic device 1 and is electrolyzed to produce the electrolyzed water. The resulting electrolyzed water flowed out of the flow outlet port 24 passes through the flow path 53, and is delivered to the discharge port 54, and is discharged onto the inner surface of the bathtub 52. The electrolyzed water is also passes through the flow path 53 and is delivered to the discharge member 56, and is discharged to the washing place 55. The electrolyzed water further passes through the flow path 53 and is delivered to the discharge member 56, and is discharged onto the wall surface and ceiling of the bathroom 51. The control unit 3 of the electrolytic device 1 has, in addition to the functions as described above, the functions to control the production of the electrolyzed water as well as the operation of the opening and closing valve of each flow path (not illustrated in the figure), according to the program and the action of the switch that is not illustrated in the figure.

[Action]

The electrolyzed water that is discharged to the bathtub 52 plays a role in the sterilization of the bathtub 52. The electrolyzed water that is discharged to the washing place 55 plays a role in the sterilization of the washing place 55. The electrolyzed water that is discharged to the wall surface of the bathroom 51 plays a role in the sterilization of the wall surface (ceiling and wall) of the bathroom 51.

In this embodiment, when the cleaning of the bathtub, the washing place, the wall surface of the bathroom is carried out, or when a combination thereof is carried out, at least a part of the seal water in the drain trap that is installed in the drain outlet port 57 may be replaced with the electrolyzed water to sterilize said bathtub and others.

Accordingly, the effect of preventing the biological stains such as slime and pink stains in the bathtub 52, the washing place 55, the wall surface of the bathroom 51, and the drain trap can be maintained for a long period of time.

Bathroom vanity

According to one embodiment of the present invention, the unit according to the present invention is a bathroom vanity. Hereinafter, an example of the constitution of the bathroom vanity unit 6 is exemplified with reference to Figure 9. The tap water-using facility comprised in the bathroom vanity unit 6 includes the bowl BL, a counter adjacent to the bowl BL, etc. The bowl BL receives the tap water that is discharged from a water faucet 61 and drains the tap water through a drain port (not illustrated in the figure). In this embodiment, the means to supply the tap water to the tap water-using facility is the water faucet 61. In the present embodiment, the water faucet 61 discharges the tap water and the electrolyzed water. The water faucet 61 comprises any one of the above-mentioned electrolytic devices 1, 1', and 1". In the present embodiment, the electrolytic device is installed, for example, in a piping portion of the water faucet 61, or in a position that is near said portion, and that is a position from which the electrolyzed water can be discharged to the surface of the bathroom vanity unit and to which the piping of the tap water can be connected.

[Control]

To the water faucet 61, the electrolyzed water that is produced in the electrolytic device 1 is delivered, and the electrolyzed water is properly sprinkled toward the bowl BL by the switch and by a sensor detection (the switch and sensor are not illustrated in the figure).

[Action]

By sprinkling the electrolyzed water, the effect of preventing the biological stains such as slime and pink stains in the bowl BL, the drain port, and the drain trap (both are not illustrated in the figure) can be maintained for a long period of time. In this embodiment, it is also possible to sterilize toiletries such as a toothbrush and a cup by applying thereto the sprinkled electrolyzed water.

Water faucet 61

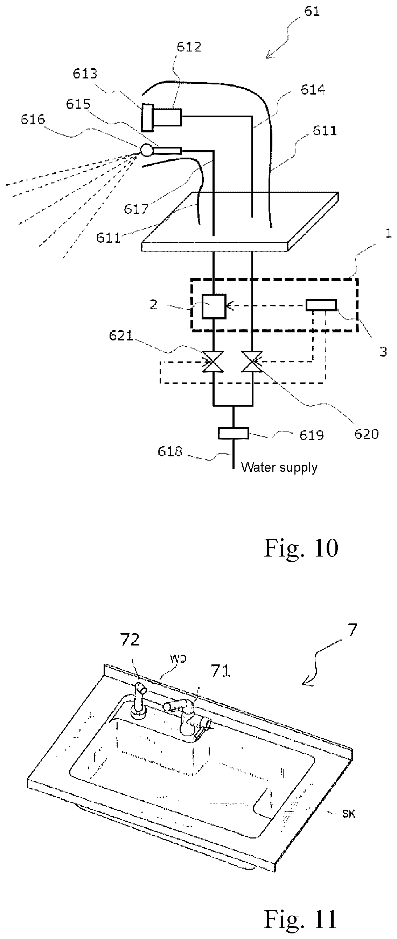

The water faucet 61 is described below with reference to Figure 10.

The water faucet 61 discharges the tap water and the electrolyzed water. In addition, there is a case where the discharge of what has function different from sterilization, such as the discharge of a perfume for beauty care.

Tap water is supplied through the common flow path 618. By means of the flow regulating valve 619, the flow rate in the downstream side is kept constant.

The electrolytic device 1 produces and discharges the electrolyzed water containing both the ozone and the free chlorine. The control unit 3 of the electrolytic device 1 has, in addition to the functions as described above, the functions to control the first electromagnetic valve 620 and the second electromagnetic valve 621.

The first discharge member 612 discharges the tap water, etc. through the first discharge port 613.

The first flow path 614 supplies the tap water, etc. to the first discharge member 612.

The second discharge member 615 has a nozzle-like shape and sprays the electrolyzed water through the second discharge port 616.

The second flow path 617 supplies the electrolyzed water to the second discharge member 615.

The first electromagnetic valve 620 switches, by being opened and closed, flowing and blocking of the tap water in the first flow path 614. When the valve 620 is opened, the tap water flows into the first flow path 614, and is discharged from the first discharge port 613 of the first discharge member 612 that is connected to the downstream end of the first flow path 614.

The second electromagnetic valve 621 switches, by being opened and closed, flowing and blocking of the tap water in the second flow path 617. When valve 621 is opened, the tap water flows into the second flow path 617; and the electrolyzed water is produced in the electrolytic device 2, the resulting electrolyzed water is sprayed from the second discharge port 616 of the second discharge member 615 that is connected to the downstream end of the second flow path 617.

The discharge pipe 611 that is a water faucet tap main body inside which the first flow path 614 and the second flow path 617 pass through and are fixed may be a warped pipy member.

[Control]

The tap water flows through the common flow path 618, and the flow rate thereof is adjusted by the flow regulating valve 619, and then, the tap water thus adjusted is guided to each of the branched paths, the first flow path 614 and the second flow path 617. The tap water guided to the first flow path 614 is delivered to the first discharge member 612 while the control unit 3 opens and closes the first electromagnetic valve 620 in response to the operation of a sensor or a switch (not illustrated in the figure), and then, said tap water is discharged from the first discharge port 613, and is used for washing hands, etc. The tap water guided to the second flow path 617 is supplied to the electrolytic device 1 while the control unit 3 opens and closes the second electromagnetic valve 621 in response to the operation of a sensor or a switch (not illustrated in the figure). Further, the control unit 3 is electronically communicated with the electrolytic device 1, and the tap water is electrolyzed to produce the electrolyzed water, and the resulting electrolyzed water is delivered to the second discharge member 615, and is sprayed from the second discharge port 616.

Kitchen

According to one embodiment of the present invention, the unit according to the present invention is a kitchen. Hereinafter, the constitution of the kitchen unit 7 is exemplified with reference to Figure 11. Examples of the tap water-using facility comprised in the kitchen unit 7 include a sink SK, an edge of the sink, and a kitchen counter. The facility also includes a dishwasher, etc. that are used in connection with the use of the kitchen unit 7. In this embodiment, the means to supply the tap water to the tap water-using facility is a tap water discharge member 71, i.e., a water tap that discharges the tap water. In this embodiment, the means to discharge the electrolyzed water is the electrolyzed water discharge member 72, and the electrolyzed water is produced by the electrolytic device 1 that is installed in the discharge device WD. In this embodiment, the electrolytic device 1 is installed, for example, in a piping portion of the electrolyzed water discharge member 72, or in a position that is near said portion, and that is a position from which the electrolyzed water can be discharged to the surface of the kitchen unit and to which the piping of the tap water can be connected.

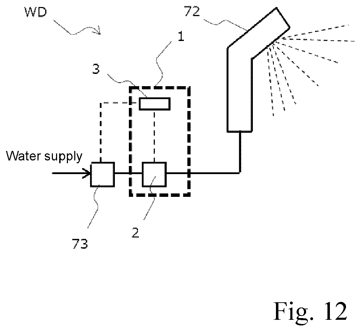

As illustrated in Figure 12, the discharge device WD has the electrolytic device 1, and the device 1 produces and discharges the electrolyzed water containing both the ozone and the free chlorine. The control unit 3 of the electrolytic device 1 has, in addition to the functions as described above, a function to control the electromagnetic valve 73. The electromagnetic valve 73 opens and closes the valve so that the discharge and shut-off of the electrolyzed water is carried out in accordance with the control signal that is output from the control unit 3. When the valve is opened, the electrolyzed water is discharged from the electrolyzed water discharge member 72.

[Control]

The electrolyzed water produced in the electrolytic device 1 that is installed in the discharge device WD is supplied to the electrolyzed water discharge member 72, and is discharged inside the sink SK and edge of the sink SK, the counter, etc. The timing of the discharge may be controlled by sending the signal that is sensed by a sensor (not illustrated in the figure) to the control unit 3, or the discharge may be performed when a user turns ON the switch, if necessary (not illustrated in the figure) that is installed in and is connected to the control unit 3.

[Action]

By sprinkling the electrolyzed water into the sink SK, the inner wall of the sink can be sterilized, and at the same time, by sprinkling the electrolyzed water onto cooking utensils such as a cutting board and a cooking knife, eating utensils, and a kitchen towel, all of which are placed in the sink, these kitchen utensils can be sterilized. In addition, when the electrolyzed water is discharged, by replacing at least a part of the seal water in the drain trap that is installed in the drain outlet port with the electrolyzed water, the effect of preventing the biological stains such as slime and pink stains in the drain trap can be maintained for a long period of time.

[Examples]

The present invention is described in more detail with reference to the following examples. The present invention, however, is not limited to these examples.

Manufacture of electrolytic device

The electrolytic device 1 illustrated in Figure 3 was manufactured in line with the following steps.

<Step 1: Preparation of Electrode 231>

Based on the literature, "Hamed Shekarchizade et al., Effect of Elemental Composition on the Structure, Electrochemical Properties, and Ozone Production Activity of Ti/SnO2-Sb-Ni Electrodes Prepared by Thermal Pyrolysis Method, 2011 (doi:10.4061/2011/240837)", the anode 2311 having a catalytic layer composed of the oxide including antimony, tin, and nickel formed on the substrate composed of titanium was prepared. A SUS plate was used as the cathode 2312. The areas of the anode 2311 and the cathode 2312 were 8 cm$^2$, respectively.

<Step 2: Assembly of electrolytic device>

A rectangular container extending in a longitudinal direction (80 mm x 50 mm x 30 mm) was used, as a container of the electrolytic cell 2. Openings allowing tap water to flow were formed in the ends of the container. The flow inlet port 21 through which the tap water flows in was formed in one opening, and the flow outlet port 24 through which the electrolyzed tap water flows out was formed in the other opening. The flow inlet port 21 and the flow outlet port 24 were connected with each other by a polyurethane tube to obtain the constitution where the tap water flows through the electrolytic cell 2. The anode 2311 extending in a longitudinal direction was installed on one inner wall surface of the electrolytic cell 2 extending in a longitudinal direction, and the cathode 2312 extending in a longitudinal direction was installed on the other inner wall surface of the cell 2. The distance between the anode 2311 and the cathode 2312 was set to 0.5 mm by interposing a spacer made of a fluororesin.

<Step 3: Installation of control unit>

A stabilized electric source was connected to the anode 2311 and to the cathode 2312, and 15 V of constant voltage was applied. The current value was controlled such that 14 mA/cm$^2$ of current density can be applied between the anode and the cathode. The flow rate of the tap water was controlled by installing a flow regulating valve immediately adjacent, in an upstream direction, to the flow inlet port 21 of the electrolytic cell 2.

Assessment 1: Production of electrolyzed water by electrolytic device 1

1-1: Production of electrolyzed water

Tap water (TOTO LTD., Nakajima 2-1, Kokurakita-ku, Kitakyusyu-shi, Fukuoka) was flowed into the electrolytic cell 2 by adjusting the flow rate to 0.45 L/min using the above-mentioned control unit. By applying to the electrode 231 the constant current using the control unit, an electrolyzed water containing both ozone and free chlorine was produced.

1-2: Measurement of concentration of ozone and of free chlorine contained in electrolyzed water

Concentration of free chlorine was measured as follows. Namely, 10 mL of the electrolyzed water was taken into a vial, and a dose of the free chlorine reagent for SWIFTEST (Hach) was added to the electrolyzed water thus taken, and the resulting mixture was mixed to quantify the free chlorine concentration using a residual chlorine meter (Hach).

Concentration of ozone was measured as follows. Namely, the electrolyzed water was taken using the ozone concentration measurement kit (Ozone AccuVac Ampules HR pk25, Hach) and was set in a portable spectrophotometer (DR1900, Hach), and then the ozone concentration was quantified in the ozone concentration measurement mode.

As a result, the ozone concentration was 0.23 ppm, and the free chloride concentration was 0.92 ppm.

Test 1: Bactericidal effect when electrolyzed water containing 1.5 ppm of free chlorine and 0.1 ppm of ozone was applied to a chlorine-resistant methylobacterium

<Step (1-1) Isolation of a chlorine-resistant methylobacterium>

Stains formed in the region in the surface of the bowl of the toilet unit "Purest" (TOTO LTD.), which is installed in the lady's toilet, 5th floor, Research Build. No. 3, the Central Research Laboratory (TOTO LTD., Motomura, Chigasaki City), said region having a height corresponding to the height of 2 cm from the water surface, were wiped out with a sterilized cotton rod, and the stains thus obtained were suspended in a physiological saline solution, and the resulting suspension was applied onto an R2A plate and was cultivated at 20°C for 7 days to obtain a plate with many colonies having grown thereon.

In this plate, single colony exhibiting a pink color was picked out and was identified its bacterium species using MALDI-Biotyper (Bruker Japan). As a result, it was found that the tested species (strain) from said colony was identical to *Methylobacterium fujisawaense* B235 UFL in that both score value were 2.26. Therefore, the tested strain was identified as a "chlorine-resistant Methylobacterium strain". On the other hand, *Methylobacterium extorquens* (NBRC15687) was purchased from National Institute of Technology and Evaluation, as a "Methylobacterium reference strain".

<Step (1-2) Production of water containing free chlorine by electrolysis of tap water>

By dipping a Pt/IrO$_2$ electrode in tap water, followed by electrolysis conducted by applying a current, an electrolyzed water containing free chlorine (hereinafter referred to as a "free chlorine water") was produced. 10 mL of this free chlorine water was taken into a vial, and a dose of the free chlorine reagent for SWIFTEST (Hach) was added to the electrolyzed water thus taken, and the resulting mixture was mixed to quantify the free chlorine concentration using a residual chlorine meter (Hach). The result was 1.5 ppm.

<Step (1-3) Production of water containing ozone by electrolysis of tap water>

Tap water was flowed through the water purification device MP02-3 (Mitsubishi Chemical Cleansui Corporation), and free chlorine was removed from said tap water. The resulting water devoid of free chlorine was stored in a bottle. Next, the resulting water devoid of free chlorine was electrolyzed by the following procedures. Namely, a commercially available diamond electrode was exposed to the resulting water devoid of free chlorine, and at the same time the constant current of 1.5 A was applied to said electrode, and water containing ozone (hereinafter referred to as an "ozone water") was produced. The resulting ozone water was taken using the ozone concentration measurement kit (Ozone AccuVac Ampules HR pk25, Hach) and was set in a portable spectrophotometer (DR1900, Hach), and then the ozone concentration was quantified in the ozone concentration measurement mode. The result was 0.1 ppm.

<Step (1-4) Measurement of bactericidal effect when electrolyzed water containing both ozone and free chlorine was applied to a clorine-resistant methylobacterium>

The colony of the chlorine-resistant Methylobacterium strain was suspended in a physiological saline solution to obtain the bacteria solution of 3x10$^8$ cells/mL.
The free chlorine water and the ozone water were used independently or in a mixture of them, and three types of the electrolyzed water: the electrolyzed water containing only free chlorine, the electrolyzed water containing only ozone, and the electrolyzed water containing both free chlorine and ozone, were prepared, the volume of each of which was 50 mL.
To each of the resulting electrolyzed water 0.5 mL of the chlorine-resistant Methylobacterium strain solution was added, and the mixture thus obtained was mixed. In other words, the chlorine-resistant Methylobacterium strain was exposed to each electrolyzed water. After passage of 10 seconds, and within 40 seconds, 1 mL of the reaction solution was taken and was neutralized by mixing it with 0.1 mL of 1% sodium thiosulfate.
The resulting neutralized solution was diluted and the resulting solution thus obtained was applied onto the R2A plate, and was cultivated at 20°C for 7 days, and then the number of resulting colonies was counted to quantify the number of living bacteria. The number of living bacteria as a result of exposure of the chlorine-resistant Methylobacterium strain to pure water was used as the control to calculate the bactericidal rate.
As a result, as shown in Figure 13 (a), the bactericidal rate to the chlorine-resistant Methylobacterium strain was 0.0% with the electrolyzed water containing 0.1 ppm of the ozone, and the rate was 30.6% with the electrolyzed water containing 1.5 ppm of the free chlorine.
On the other hand, 43.1% of the bactericidal rate was obtained with the electrolyzed water containing both 1.5 ppm of the free chlorine and 0.1 ppm of the ozone. This effect was beyond the sum of the bactericidal effect separately obtained by exposure to 1.5 ppm of the free chlorine or to 0.1 ppm of the ozone, and thereby, it was an amazingly synergic bactericidal effect.

Test 2: Bactericidal effect when electrolyzed water containing both 0.375 ppm of free chlorine and 0.2 ppm of ozone was applied to chlorine-resistant methylobacterium

In the same way as Test 1, the bactericidal rates of the following 3 types of electrolyzed water to the chlorine-resistant Methylobacterium strain were calculated.
As a result, as can be seen in Figure 13 (b), the bactericidal rate to the chlorine-resistant Methylobacterium strain was 9.4% with the electrolyzed water containing 0.2 ppm of the ozone, and the rate was 10.6% with the electrolyzed water containing 0.375 ppm of the free chlorine.
On the other hand, 40.9% of the bactericidal rate was obtained with the electrolyzed water containing both 0.375 ppm of the free chlorine and 0.2 ppm of the ozone. This effect was beyond the sum of the bactericidal effect separately obtained by exposure to 0.375 ppm of the free chlorine or to 0.2 ppm of the ozone, and thereby, it was an amazingly synergic bactericidal effect.

Test 3: Bactericidal effect when electrolyzed water containing both 0.75 ppm of free chlorine and 0.2 ppm of ozone was applied to chlorine-resistant methylobacterium

In the same way as Test 1, the bactericidal rates of the following 3 types of electrolyzed water to the chlorine-resistant Methylobacterium strain were calculated.

As a result, as can be seen in Figure 13 (c), the bactericidal rate to the chlorine-resistant Methylobacterium strain was 9.4% with the electrolyzed water containing 0.2 ppm of the ozone, and the rate was 19.7% with the electrolyzed water containing 0.75 ppm of the free chlorine.

On the other hand, 52.9% of the bactericidal rate was obtained with the electrolyzed water containing both 0.75 ppm of the free chlorine and 0.2 ppm of the ozone. This effect was beyond the sum of the bactericidal effect separately obtained by exposure to 0.75 ppm of the free chlorine or to 0.2 ppm of the ozone, and thereby, it was an amazingly synergic bactericidal effect.

Test 4: Bactericidal effect when electrolyzed water containing both 1.5 ppm of free chlorine and 0.2 ppm of ozone was applied to chlorine-resistant methylobacterium

In the same way as Test 1, the bactericidal rates of the following 3 types of electrolyzed water to the chlorine-resistant Methylobacterium strain were calculated.

As a result, as can be seen in Figure 13 (d), the bactericidal rate to the chlorine-resistant Methylobacterium strain was 9.4% with the electrolyzed water containing 0.2 ppm of the ozone, and the rate was 30.6% with the electrolyzed water containing 1.5 ppm of the free chlorine.

On the other hand, 77.9% of the bactericidal rate was obtained with the electrolyzed water containing both 1.5 ppm of the free chlorine and 0.2 ppm of the ozone. This effect was beyond the sum of the bactericidal effect separately obtained by exposure to 1.5 ppm of the free chlorine or to 0.2 ppm of the ozone, and thereby, it was an amazingly synergic bactericidal effect.

Comparative Example 1: Bactericidal effect when electrolyzed water containing both 0.1 ppm of ozone and 0 to 0.75 ppm of free chlorine was applied to chlorine-resistant methylobacterium

In the same way as Test 1, the bactericidal rates of the following 3 types of electrolyzed water to the chlorine-resistant Methylobacterium strain were calculated.

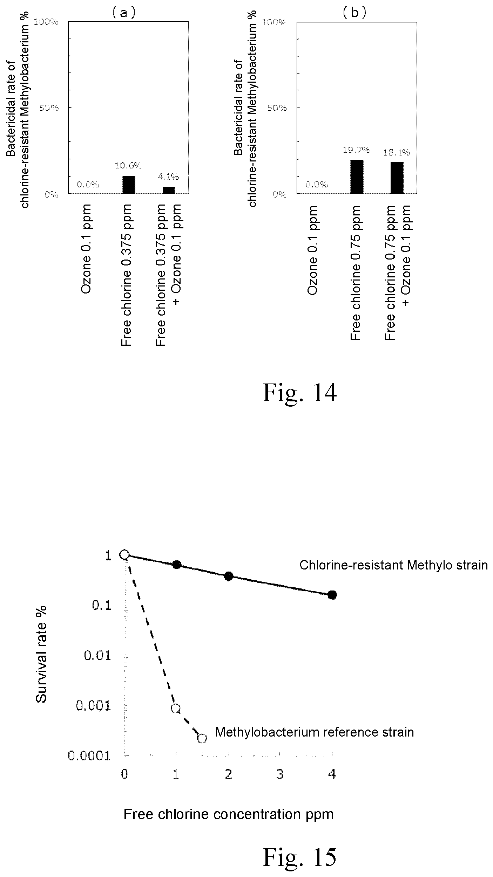

As a result, as can be seen in Figure 14 (a), the bactericidal rate to the chlorine-resistant Methylobacterium strain was 0.0% with the electrolyzed water containing 0.1 ppm of the ozone, and the rate was 10.6% with the electrolyzed water containing 0.375 ppm of the free chlorine. On the other hand, only 4.1% of the bactericidal rate was obtained with the electrolyzed water containing both 0.1 ppm of the ozone and 0.375 ppm of the free chlorine, indicating there was no synergic effect recognized.

Next, in the same way as Test 1, the bactericidal rates of the following 3 types of electrolyzed water to the chlorine-resistant Methylobacterium strain were calculated.

As a result, as can be seen in Figure 14 (b), the bactericidal rate to the chlorine-resistant Methylobacterium strain was 0.0% with the electrolyzed water containing 0.1 ppm of the ozone, and the rate was 19.7% with the electrolyzed water containing 0.75 ppm of the free chlorine. On the other hand, only 18.1% of the bactericidal rate was obtained with the electrolyzed water containing both 0.1 ppm of the ozone and 0.75 ppm of the free chlorine, indicating there was no synergic effect recognized.

Comparative Example 2: Bactericidal effect when electrolyzed water containing only free chlorine was applied to chlorine-resistant methylobacterium

When the electrolyzed water containing 0 to 4 ppm of the free chlorine was exposed to the chlorine-resistant Methylobacterium strain for 10 seconds, the survival rate of more than 0.1 was obtained even with 4 ppm, as can be seen in Figure 15, so that only a low bactericidal effect was obtained. On the other hand, as for the Methylobacterium reference strain, the survival rate was less than 0.001 with the free chlorine of 1.5 ppm, so that a high bactericidal effect was obtained.

Reference Example 1: Quantification of degree of cell membrane damage and observation of chlorine-resistant methylobacterium strain after exposure to free chlorine water and/or ozone water

<Exposure of bacterium to free chlorine water and to ozone water>

The colony of the chlorine-resistant Methylobacterium strain was suspended in a physiological saline solution to obtain the bacteria solution of $3 \times 10^8$ cells/mL. The free chlorine water and the ozone water were used independently or in a mixture of them, and four types of electrolyzed water: the electrolyzed water containing 0.3 ppm of free chlorine only, the electrolyzed water containing 0.2 ppm of the ozone only, the electrolyzed water containing 0.4 ppm of the ozone only, and the electrolyzed water containing both 0.3 ppm of the free chlorine and 0.2 ppm of the ozone, were prepared, the volume of each of which was 50 mL.

To each of the resulting electrolyzed water 0.5 mL of the chlorine-resistant Methylobacterium strain solution was added, and the mixture thus obtained was mixed and then was incubated for 40 seconds. Then, 5 mL of 2% sodium thiosulfate was added, and the mixture thus obtained was mixed with the reaction solution to terminate the reaction. Consequently, four types of neutralized solutions were obtained.

<Preparation of observation sample>

For visualization of the bacteria solution, a nuclear staining kit by Thermo Fisher (LIVE/DEADTM FungaLightTM, Yeast Viability Kit, for flow cytometry) was used. To each neutralized solution 12.5 μL of SYTO9 with concentration of 120 μM and 12.5 μL of PI (propidium iodide) with concentration of 600 μM was mixed; then, the resulting mixture was dropped onto a slide glass and was allowed to stand in a dark place at 25°C for 30 minutes to obtain the observation sample.

<Observation>

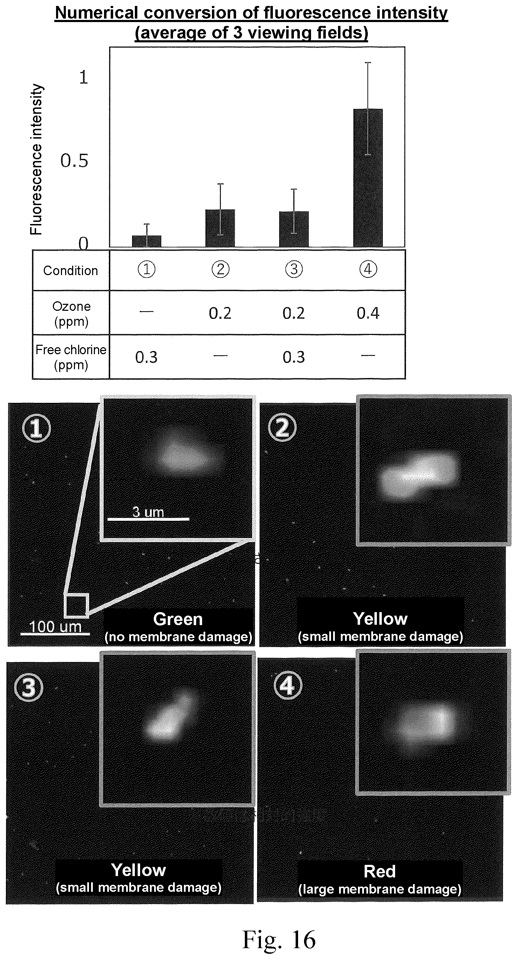

By using a confocal fluorescence microscopy, laser beams with the exiting light wavelength of 488 nm and 561 nm were irradiated on the surface of the observation sample; then a green florescence and a red fluorescence emitted by two nuclear staining reagents (SYTO9 and PI) were observed. The resulting florescence observation images are shown in Figure 16.

Three viewing fields were observed for each condition. As for the lens, Plan-APOCHROMAT 63x (Carl Zeiss) was used. The observation conditions were as follows.

- Laser strength: PI (561 nm); 12.0, and SYTO9 (488 nm); 14.0
- Detector Sensitivity: red fluorescence; 525, and green fluorescence; 644

By using the analysis software (Imaris, Carl Zeiss), intensities of the red fluorescence and of the green fluorescence of whole bacteria captured by the fluorescence observation images were calculated. The red fluorescence intensity/green fluorescence intensity of each viewing field were calculated; and the average value of three viewing fields with each condition was taken as the degree of membrane damage. The results of the degree of membrane damage are described in Figure 16.

As can be seen in Figure 16, the degree of membrane damage with 0.3 ppm of the free chlorine alone was 0.069, the degree of membrane damage with 0.2 ppm of ozone alone was 0.225, the degree of membrane damage with 0.3 ppm of the free chlorine and 0.2 ppm of the ozone was 0.213, and the degree of membrane damage with 0.4 ppm of the ozone alone was 0.829. From the quantitative results of the degree of membrane damage, two points are indicated: (i) the ozone alone has a damaging effect on the membrane, and (ii) the free chlorine alone does not have any damaging effect on the membrane.

<Results>

The results of Reference Example 1 indicates that the combination of the free chlorine and the ozone exhibits the membrane damage effect more than the free chlorine alone, suggesting that the membrane damaging action of a low concentration of ozone allows the free chlorine to penetrate inside the membrane, thereby making it possible to effectively sterilize the bacterium.

Reference Example 2: Surface observation of clorine-resistant methylobacterium strain after exposure to free chlorine water and ozone

<Exposure of Free Clorine Water and of Ozone Water to Bacterium>

The colony of the chlorine-resistant Methylobacterium strain was suspended in a physiological saline solution to obtain the bacteria solution of $3\times10^8$ cells/mL. The free chlorine water and the ozone water were used independently or in a mixture of them, and four types of electrolyzed water: the electrolyzed water containing 0.4 ppm of the free chlorine only, the electrolyzed water containing 0.2 ppm of the ozone only, the electrolyzed water containing 0.4 ppm of the ozone only, and the electrolyzed water containing both 0.4 ppm of the free chlorine and 0.2 ppm of the ozone, were prepared with 50 mL each.

To each of the resulting electrolyzed water 0.5 mL of the chlorine-resistant Methylobacterium strain solution was added, and the mixture thus obtained was mixed and then was incubated for 40 seconds. Then, 5 mL of 2% sodium thiosulfate was added, and the mixture thus obtained was mixed with the reaction solution to terminate the reaction. Consequently, four types of neutralized solutions were obtained.

<Preparation of Observation Sample>

The resulting neutralized solutions each were filtrated through a membrane filter, and the resulting bacteria attached onto the filter were immobilized by using glutaraldehyde. Next, the immobilized bacteria were replaced with ethanol, and then with t-butyl alcohol. The bacteria were frozen and then set to a freeze dryer (JFD-300); then, the freeze drying was performed with evacuating the dryer to obtain the observation sample.

<Observation>

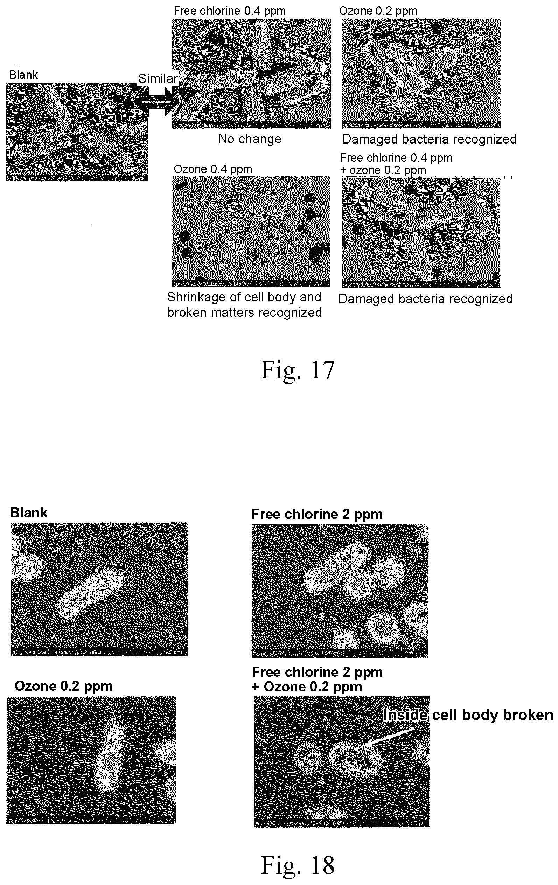

The resulting observation sample was studied by using an electron microscope, an ultra-high resolution field emission scanning electron microscope (Regulus 8220, Hitachi). The results are described in Figure 17. In Figure 17, the blank is the observation sample prepared by the same method except that pure water was used in place of the electrolyzed water.

<Results>

There was no difference in the appearance between the blank and the sample exposed only to the free chlorine. On the other hand, in the sample exposed only to the ozone, it was recognized that the shape of the cell surface was damaged and destroyed. In addition, there was no difference in the appearance between the sample exposed to both the ozone and the free chlorine and the sample exposed only to the ozone.

Accordingly, the role of the ozone for sterilization is to damage the thickened membrane of the chlorine-resistant Methylobacterium. Therefore, when the concentration of the ozone is high, it is even possible to let the chlorine-resistant Methylobacterium be in a bacteriolysis. On the other hand, it is suggested that the free chlorine is not related to the action of the membrane damage.

Reference Example 3: Observation of inner structure of clorine-resistant methylobacterium strain after exposure to free chlorine water and to ozone

<Exposure of Free Chlorine Water and of Ozone Water to Bacterium>

The colony of the chlorine-resistant Methylobacterium strain was suspended in a physiological saline solution to obtain the bacteria solution of $3 \times 10^8$ cells/mL. The free chlorine water and the ozone water were used independently or in a mixture of them, and three types of electrolyzed water: the electrolyzed water containing 2 ppm of the free chlorine only, the electrolyzed water containing 0.2 ppm of the ozone only, and the electrolyzed water containing both 2 ppm of the free chlorine and 0.2 ppm of the ozone, were prepared with 50 mL each.

To each of the resulting electrolyzed water, 0.5 mL of the chlorine-resistant Methylobacterium strain solution was added, and the mixture thus obtained was mixed and then was incubated for 40 seconds. Then, 5 mL of 2% sodium thiosulfate was added, and the mixture thus obtained was mixed with the reaction solution to terminate the reaction. Consequently, three neutralized solutions were obtained.

<Preparation of observation sample>

In order to observe the inside of the cell body of the chlorine-resistant Methylobacterium strain, the sample having the chlorine-resistant Methylobacterium strain encapsuled in a resin was prepared with reference to "Keisuke Ohta, et al.: From Basis to Practice of FIB-SEM tomography method, Medical Technology 50: 603-609 (2022)".

Specifically, firstly each neutralized solution was mixed with glutaraldehyde to preimmobilize the sample. Next, the sample was solidified by adding an agar, and then, this was cut to small pieces. Then, the resulting cut sample was post-immobilized by osmium, stained with an electronic staining method to obtain the contrast for the sample observation. Then, the stained sample was replaced to an epoxy resin, and the sample encapsulated with the resin was cut out with a razor to obtain the observation sample.

<Observation>

The resulting observation sample was studied by using an electron microscope, an ultra-high resolution field emission scanning electron microscope (Regulus 8220, Hitachi). The results are described in Figure 18. In Figure 18, the blank is the observation sample prepared by the same method except that pure water was used in place of the electrolyzed water.

<Results>

When exposed solely to the free chlorine or to the ozone, an organization is packed inside the cell body similarly to the blank. On the other hand, when exposed to both the free chlorine and the ozone, it is observed that the organization inside the cell body is destroyed. Accordingly, it is suggested that when there is a damage in the membrane by the ozone, the free chlorine is allowed to penetrate into the cell body through the thickened membrane of the chlorine-resistant Methylobacterium, thereby destroying the inside of the cell body.

Test 5: Bactericidal effect when electrolyzed water containing both 1.5 ppm of free chlorine and 0.05 ppm of ozone was applied to chlorine-resistant methylobacterium

In the same way as Test 1, the bactericidal rates of the following 3 types of electrolyzed water to the chlorine-resistant Methylobacterium strain were calculated.

As a result, as can be seen in Figure 19 (a), the bactericidal rate to the chlorine-resistant Methylobacterium strain was 0.0% with the electrolyzed water containing 0.05 ppm of the ozone and the rate was 89.4% with the electrolyzed water containing 1.5 ppm of the free chlorine.

On the other hand, 99.9% of the bactericidal rate was obtained with the electrolyzed water containing both 1.5 ppm of the free chlorine and 0.05 ppm of the ozone. This effect was beyond the sum of the bactericidal effect separately obtained by exposure to 1.5 ppm of the free chlorine or to 0.05 ppm of the ozone, and thereby, it was an amazingly synergic bactericidal effect.

Test 6: Bactericidal effect when electrolyzed water containing both 1.0 ppm of free chlorine and 0.1 ppm of ozone was applied to chlorine-resistant methylobacterium

In the same way as Test 1, the bactericidal rates of the following 3 types of electrolyzed water to the chlorine-resistant Methylobacterium strain were calculated.

As a result, as can be seen in Figure 19 (b), the bactericidal rate to the chlorine-resistant Methylobacterium strain was 2.1% with the electrolyzed water containing 0.1 ppm of the ozone and the rate was 28.3% with the electrolyzed water containing 1.0 ppm of the free chlorine.

On the other hand, 68.9% of the bactericidal rate was obtained with the electrolyzed water containing both 1.0 ppm of the free chlorine and 0.1 ppm of the ozone. This effect was beyond the sum of the bactericidal effect separately obtained by exposure to 1.0 ppm of the free chlorine or 0.1 ppm of the ozone, and thereby, it was an amazingly synergic bactericidal effect.

Test 7: Bactericidal effect when electrolyzed water containing both 0.2 ppm of free chlorine and 0.2 ppm of ozone was applied to chlorine-resistant methylobacterium

In the same way as Test 1, the bactericidal rates of the following 3 types of electrolyzed water to the chlorine-resistant Methylobacterium strain were calculated.

As a result, as can be seen in Figure 19 (c), the bactericidal rate to the chlorine-resistant Methylobacterium strain was 5.0% with the electrolyzed water containing 0.2 ppm of the ozone and the rate was 12.5% with the electrolyzed water containing 0.2 ppm of the free chlorine.

On the other hand, 27.5% of the bactericidal rate was obtained with the electrolyzed water containing both 0.2 ppm of the free chlorine and 0.2 ppm of the ozone. This effect was beyond the sum of the bactericidal effect separately obtained by exposure to 0.2 ppm of the free chlorine or 0.2 ppm of the ozone, and thereby, it was an amazingly synergic bactericidal effect.

Test 8: Bactericidal effect when electrolyzed water containing both 2.0 ppm of free chlorine and 0.2 ppm of ozone was applied to chlorine-resistant methylobacterium in the presence of organic substances with the level of medium concentration (mg/L-order)

In the same way as Test 1, the bactericidal effects of the following 3 types of electrolyzed water to the chlorine-resistant Methylobacterium strain were measured. Here, the bactericidal effect was expressed by the value obtained by subtracting the common logarithm of the remaining bacteria number after exposure to the electrolyzed water from the common logarithm of the initial bacteria number.

In addition, at the step (1-4), at the time when 0.5 mL of the solution of the chlorine-resistant Methylobacterium strain was added to the prepared electrolyzed water, a bovine serum albumin (bovine serum albumin (F-V), Nacalai Tesque) was added simultaneously such that the final concentration thereof in the resulting mixture would become 2 mg/L. Therefore, Test 8 is deemed to be conducted in the presence of organic substances with the level of medium concentration (level of mg/L).

As a result, as can be seen in Figure 20 (a), the bactericidal effect to the chlorine-resistant Methylobacterium strain was 0 with the electrolyzed water containing 0.2 ppm of the ozone, and the effect was 0.69 with the electrolyzed water containing 2.0 ppm of the free chlorine.

On the other hand, 1.03 of the bactericidal effect was obtained with the electrolyzed water containing both 2.0 ppm of the free chlorine and 0.2 ppm of the ozone. This effect was beyond the sum of the bactericidal effect separately obtained by exposure to 2.0 ppm of the free chlorine or to 0.2 ppm of the ozone, and thereby, it was an amazingly synergic bactericidal effect.

Test 9: Bactericidal effect when electrolyzed water containing both 4.9 ppm of free chlorine and 1.0 ppm of ozone was applied to chlorine-resistant methylobacterium in the presence of organic substances with the level of medium concentration (mg/L-oder)

In the same way as Test 8, the bactericidal effects of the following 3 types of electrolyzed water to the chlorine-resistant Methylobacterium strain were measured. Here, at the step (1-4), the bovine serum albumin was added such that the final concentration thereof in the resulting mixture would become 20 mg/L.

As a result, as can be seen in Figure 20 (b), the bactericidal effect to the chlorine-resistant Methylobacterium strain was 1.61 with the electrolyzed water containing 1.0 ppm of the ozone, and the effect was 1.64 with the electrolyzed water containing 4.9 ppm of the free chlorine.

On the other hand, 3.73 of the bactericidal effect was obtained with the electrolyzed water containing both 1.0 ppm of the ozone and 4.9 ppm of the free chlorine. This effect was beyond the sum of the bactericidal effect separately obtained by exposure to 4.9 ppm of the free chlorine or to 1.0 ppm of the ozone, and thereby, it was an amazingly synergic bactericidal effect.

Test 10: Bactericidal effect when electrolyzed water containing both 4.9 ppm of free chlorine and 2.9 ppm of ozone was applied to chlorine-resistant methylobacterium in the presence of organic substances with the level of medium concentration (mg/L-order)

In the same way as Test 8, the bactericidal effects of the following 3 types of electrolyzed water to the chlorine-resistant Methylobacterium strain were measured. Here, at the step (1-4), the bovine serum albumin was added such that the final concentration thereof in the resulting mixture would become 60 mg/L.

As a result, as can be seen in Figure 20 (c), the bactericidal effect to the chlorine-resistant Methylobacterium strain was 2.23 with the electrolyzed water containing 2.9 ppm of the ozone, and the effect was 0.20 with the electrolyzed water containing 4.9 ppm of the free chlorine.

On the other hand, 3.88 of the bactericidal effect was obtained with the electrolyzed water containing both 4.9 ppm of the free chlorine and 2.9 ppm of the ozone. This effect was beyond the sum of the bactericidal effect separately obtained by exposure to 4.9 ppm of the free chlorine or to 2.9 ppm of the ozone, and thereby, it was an amazingly synergic bactericidal effect.

**Claims**

1. A unit with a tap water-using facility in a building, wherein

   the unit comprises a means to supply tap water to the tap water-using facility, an electrolytic device to produce electrolyzed water by electrolyzing the tap water, and a means to discharge the electrolyzed water which allows the electrolyzed water to be in contact with a surface of the unit; and
   the electrolyzed water comprises ozone and free chlorine, and a concentration of the ozone and a concentration of the free chlorine satisfy, when the latter concentration is referred to as y (ppm) and the former concentration is referred to as x (ppm), all conditions represented by the following formula 1, formula 2, and formula 3:

   $$\text{formula 1: } y \geq 4.1079e^{-18.35x},$$

   $$\text{formula 2: } 0.1 \leq y < 5,$$

   and

   $$\text{formula 3: } 0 < x < 3.$$

2. The unit according to claim 1, wherein the electrolyzed water comprises:

   A: 0.05 ppm or more of the ozone and 1.5 ppm or more of the free chlorine,
   B: 0.1 ppm or more of the ozone and more than 0.75 ppm of the free chlorine, or
   C: 0.2 ppm or more of the ozone and 0.1 ppm or more of the free chlorine.

3. The unit according to claim 1 or 2, wherein the electrolyzed water comprises 0.1 ppm or more of the ozone and more than 0.75 ppm of the free chlorine, or comprises 0.2 ppm or more of the ozone and 0.1 ppm or more of the free chlorine.

4. The unit according to any one of claims 1 to 3, wherein the means to supply tap water to the tap water-using facility comprises a first tap water supply means to supply the tap water to the tap water-using facility through the electrolytic device and a second tap water supply means to supply the tap water to the tap water-using facility not through the electrolytic device.

5. The unit according to claim 4, wherein the means to supply tap water to the tap water-using facility is the first tap water supply means to supply the tap water to the tap water-using facility through the electrolytic device, and wherein the tap water is supplied to the tap water-using facility when the electrolytic device is in OFF state, and the electrolyzed water is supplied to the tap water-using facility when the electrolytic device is in ON state.

6. The unit according to any one of claims 1 to 5, wherein the concentration of the ozone comprised in the electrolyzed water is less than 3 ppm.

7. The unit according to any one of claims 1 to 6, wherein the concentration of the free chlorine comprised in the electrolyzed water is less than 5 ppm.

8. The unit according to any one of claims 1 to 7, wherein

   the electrolytic device comprises an electrolytic cell that produces the electrolyzed water by electrolyzing the tap water and a control unit that controls the electrolysis;
   the electrolytic cell comprises a flow inlet port through which the tap water flows in; a flow path that communicates with the flow inlet port; an electrode that is positioned in the flow path and that electrolyzes the tap water having once flowed in; and a flow outlet port, which is positioned in a downstream side relative to the flow path as well as in a downstream side relative to the electrode, and through which the electrolyzed water flows out;
   the flow outlet port and the means to discharge the electrolyzed water are communicated with each other; and
   the control unit controls a discharge of the electrolyzed water from the means to discharge the electrolyzed water to the surface of the unit.

**9.** The unit according to claim 8, wherein the electrode comprises one electrode pair that produces both the ozone and the free chlorine.

**10.** The unit according to claim 8, wherein the electrode comprises an electrode pair that produces the ozone and an electrode pair that produces the free chlorine, separately.

**11.** The unit according to any one of claims 8 to 10, wherein the electrolytic device does not comprise a means to supply a chlorine compound to the electrode.

**12.** A method for preventing a chlorine-resistant Methylobacterium from growing on a surface of a unit with a tap water-using facility, or for sterilizing the chlorine-resistant Methylobacterium having once grown on the surface of the unit, wherein

the method comprises the step of making the surface of the unit come into contact with electrolyzed water produced by electrolyzing tap water; and
the electrolyzed water comprises ozone and free chlorine, and a concentration of the ozone and a concentration of the free chlorine satisfy, when the latter concentration is referred to as y (ppm) and the former concentration is referred to as x (ppm), all conditions represented by the following formula 1, formula 2, and formula 3:

$$\text{formula 1: } y \geq 4.1079e^{-18.35x}$$

$$\text{formula 2: } 0.1 \leq y < 5,$$

and

$$\text{formula 3: } 0 < x < 3.$$

**13.** The method according to claim 12, wherein the electrolyzed water comprises:

A: 0.05 ppm or more of the ozone and 1.5 ppm or more of the free chlorine,
B: 0.1 ppm or more of the ozone and more than 0.75 ppm of the free chlorine, or
C: 0.2 ppm or more of the ozone and 0.1 ppm or more of the free chlorine.

**14.** The unit according to claim 12 or 13, wherein the electrolyzed water comprises 0.1 ppm or more of the ozone and more than 0.75 ppm of the free chlorine, or comprises 0.2 ppm or more of the ozone and 0.1 ppm or more of the free chlorine.

**15.** The method according to any one of claims 12 to 14, wherein the concentration of the ozone comprised in the electrolyzed water is less than 3 ppm.

**16.** The method according to any one of claims 12 to 15, wherein the concentration of the free chlorine comprised in the electrolyzed water is less than 5 ppm.

**Chlorine-resistant strain**

Ozone

Free chlorine

Fig. 1

**Reference strain**

Free chlorine   Ozone

(A)

**Chlorine-resistant strain**

Free chlorine   Ozone

(B)

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**Numerical conversion of fluorescence intensity
(average of 3 viewing fields)**

| Condition | ① | ② | ③ | ④ |
|---|---|---|---|---|
| Ozone (ppm) | — | 0.2 | 0.2 | 0.4 |
| Free chlorine (ppm) | 0.3 | — | 0.3 | — |

① Green (no membrane damage)

② Yellow (small membrane damage)

③ Yellow (small membrane damage)

④ Red (large membrane damage)

3 um

100 um

Fig. 16

Free chlorine 0.4 ppm

Ozone 0.2 ppm

Blank

Similar

No change

Damaged bacteria recognized

Ozone 0.4 ppm

Free chlorine 0.4 ppm
+ ozone 0.2 ppm

Shrinkage of cell body and
broken matters recognized

Damaged bacteria recognized

Fig. 17

**Blank**

**Free chlorine 2 ppm**

**Ozone 0.2 ppm**

**Free chlorine 2 ppm
+ Ozone 0.2 ppm**

Inside cell body broken

Fig. 18

Fig. 19

Fig. 20

Fig. 21

EP 4 563 049 A1

## INTERNATIONAL SEARCH REPORT

International application No.

PCT/JP2023/027796

| A. | CLASSIFICATION OF SUBJECT MATTER |
|---|---|

*A47K 4/00*(2006.01)i; *E03D 9/00*(2006.01)i; *C02F 1/461*(2023.01)i; *E03C 1/046*(2006.01)i
FI:   C02F1/461 Z; A47K4/00; E03D9/00 Z; E03C1/046

According to International Patent Classification (IPC) or to both national classification and IPC

| B. | FIELDS SEARCHED |
|---|---|

Minimum documentation searched (classification system followed by classification symbols)

A47K4/00; E03D9/00-9/16; C02F1/46-1/48; E03C1/00-1/33

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2018-161393 A (TOTO LTD.) 18 October 2018 (2018-10-18)<br>paragraphs [0055]-[0068], [0207]-[0212], fig. 3, 13 | 1-16 |
| Y | JP 2008-73604 A (PERMELEC ELECTRODE LTD.) 03 April 2008 (2008-04-03)<br>paragraphs [0010], [0060]-[0066] | 1-16 |
| Y | WO 2020/179619 A1 (PANASONIC INTELLECTUAL PROPERTY MANAGEMENT CO., LTD.) 10 September 2020 (2020-09-10)<br>paragraphs [0011], [0012] | 1-16 |
| Y | JP 10-306484 A (TOTO LTD.) 17 November 1998 (1998-11-17)<br>paragraphs [0315]-[0320], fig. 3 | 5 |
| A | JP 2014-177743 A (TOTO LTD.) 25 September 2014 (2014-09-25) | 1-16 |
| A | WO 2016/088587 A1 (TOTO LTD.) 09 June 2016 (2016-06-09) | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/027796**

| Patent document cited in search report | | | Publication date (day/month/year) | Patent family member(s) | | | Publication date (day/month/year) |
|---|---|---|---|---|---|---|---|
| JP | 2018-161393 | A | 18 October 2018 | (Family: none) | | | |
| JP | 2008-73604 | A | 03 April 2008 | US | 2008/0067078 | A1 | |
| | | | | paragraphs [0026]-[0030], [0178]-[0185] | | | |
| | | | | EP | 1903128 | A2 | |
| | | | | CN | 101187037 | A | |
| | | | | KR | 10-2008-0026488 | A | |
| WO | 2020/179619 | A1 | 10 September 2020 | (Family: none) | | | |
| JP | 10-306484 | A | 17 November 1998 | US | 6319390 | B1 | |
| | | | | column 39, line 20 to column 40, line 8, fig. 3 | | | |
| | | | | WO | 1996/006237 | A1 | |
| | | | | EP | 778375 | A1 | |
| | | | | EP | 1029991 | A2 | |
| | | | | CN | 1346916 | A | |
| | | | | KR | 10-1997-0705680 | A | |
| JP | 2014-177743 | A | 25 September 2014 | (Family: none) | | | |
| WO | 2016/088587 | A1 | 09 June 2016 | US | 2017/0328047 | A1 | |
| | | | | CN | 107109830 | A | |

Form PCT/ISA/210 (patent family annex) (January 2015)

## REFERENCES CITED IN THE DESCRIPTION

**Patent documents cited in the description**

- JP H101998306484 A
- JP 2008168002 A
- JP 2008073604 A
- JP 6890793 B

- JP 2012 A
- JP 12695 A
- JP 2013142166 A

**Non-patent literature cited in the description**

- **NOZOMI IHARA**. A pink monster hiding in a bathroom. *Journal of The Society for Biotechnology*, 2016, vol. 94 (4)
- **KATSUNORI FURUHATA**. The Mechanism of Resistance to Free Residual Chlorine in Protomonas extorquens Isolated at a High frequently from Drinking Tank-Water. *J. Antibact. Antifung. Agents*, 1991, vol. 19 (8), 395-399
- **NOZOMI IHARA**. A pink monster hiding in a bathroom. The Society for Biotechnology, 2016, vol. 94

- **HAMED SHEKARCHIZADE et al.** *Effect of Elemental Composition on the Structure, Electrochemical Properties, and Ozone Production Activity of Ti/SnO2-Sb-Ni Electrodes Prepared by Thermal Pyrolysis Method*, 2011
- **KEISUKE OHTA et al.** From Basis to Practice of FIB-SEM tomography method. *Medical Technology*, 2022, vol. 50, 603-609